(19) Europäisches Patentamt / European Patent Office / Office européen des brevets

(11) **EP 3 612 431 B1**

(12) **FASCICULE DE BREVET EUROPEEN**

(45) Date de publication et mention
de la délivrance du brevet:
**04.08.2021 Bulletin 2021/31**

(21) Numéro de dépôt: **18719967.4**

(22) Date de dépôt: **12.04.2018**

(51) Int Cl.:
**B62D 6/10** *(2006.01)*  **B62D 5/04** *(2006.01)*
**B62D 1/16** *(2006.01)*  **B62D 6/00** *(2006.01)*

(86) Numéro de dépôt international:
**PCT/FR2018/050917**

(87) Numéro de publication internationale:
**WO 2018/193187 (25.10.2018 Gazette 2018/43)**

(54) **ENSEMBLE POUR VEHICULE AUTOMOBILE COMPRENANT UNE DIRECTION ASSISTEE ELECTRIQUE**

ANORDNUNG FÜR EIN KRAFTFAHRZEUG MIT ELEKTRISCHER SERVOLENKUNG

ASSEMBLY FOR A MOTOR VEHICLE COMPRISING ELECTRIC POWER STEERING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.04.2017 FR 1753350**

(43) Date de publication de la demande:
**26.02.2020 Bulletin 2020/09**

(73) Titulaires:
• **Renault s.a.s.**
**92100 Boulogne-Billancourt (FR)**
• **Nissan Motor Co. Ltd**
**Yokohama-Shi, Kanagawa 221-0023 (JP)**
Etats contractants désignés:
**AL AT BG CH CY CZ DE DK EE ES FI GB HR HU
IS LI LU MK NO PL PT RO RS SE SK SM TR**

(72) Inventeur: **ROLLET, Rémi**
**91190 Gif-sur-Yvette (FR)**

(74) Mandataire: **Rougemont, Bernard**
**Renault Technocentre**
**Département Propriété Intellectuelle**
**Sce 00267 TCR GRA 2 36**
**1 Avenue du Golf**
**78288 Guyancourt Cedex (FR)**

(56) Documents cités:
**EP-A1- 1 234 746      JP-A- H09 254 804
JP-A- 2008 174 047     US-A1- 2003 042 067
US-A1- 2007 107 977**

**Description**

DOMAINE TECHNIQUE

La présente invention concerne un ensemble pour véhicule automobile comprenant une direction assistée électrique, ainsi qu'un véhicule électrique comprenant un tel ensemble. L'invention concerne aussi un procédé de pilotage d'une direction assistée électrique pour un tel ensemble.

ETAT DE L'ART

De manière classique, un véhicule automobile comprend un boîtier de direction comportant une crémaillère reliée à des roues du véhicule automobile et configurée pour se déplacer en translation par rapport au véhicule automobile suivant une direction transversale à une direction d'extension longitudinale dudit véhicule automobile, de sorte à entraîner le braquage des roues. Le véhicule automobile comprend en outre une colonne de direction comportant un arbre de direction, un volant qui entraîne en rotation l'arbre de direction par son extrémité supérieure autour d'un premier axe de rotation, et un pignon monté solidaire en rotation avec une extrémité inférieure de l'arbre de direction. Le pignon pivote autour d'un deuxième axe de rotation, lorsque le volant entraîne en rotation l'arbre de direction autour du premier axe de rotation, et applique en outre sur la crémaillère un couple de pignon de sorte à en entraîner la translation suivant la direction transversale. Le véhicule automobile peut en outre comprendre une direction assistée électrique comprenant un moteur électrique auquel un courant électrique d'assistance est délivré et qui, à partir de l'intensité du courant électrique d'assistance ainsi délivré, applique sur la crémaillère du boîtier de direction un couple d'assistance pour assister le pignon.

Il est connu de déterminer l'intensité du courant électrique d'assistance à délivrer à la direction assistée électrique, et donc le couple d'assistance à appliquer à la crémaillère, à partir du couple de pignon mesuré. Cela permet d'aboutir à une loi d'assistance qui, lorsque le véhicule automobile roule à faibles vitesses ou est à l'arrêt et que les roues sont braquées, autrement dit lorsqu'un couple total très important est à fournir pour braquer les roues, comme cela est par exemple le cas lors de manœuvres en parking ou de virages en coin de rue, tend vers un couple d'assistance qui augmente rapidement tandis que le couple de pignon est globalement constant.

Cela peut cependant poser problème lorsque l'arbre de direction est divisé en au moins deux tronçons articulés par l'intermédiaire de joints de cardan simples, un tronçon supérieur, encore appelé arbre volant, s'étendant suivant le premier axe de rotation et comprenant l'extrémité supérieure et un tronçon inférieur, encore appelé arbre pignon, s'étendant suivant le deuxième axe de rotation et comprenant l'extrémité inférieure. La plupart du temps, ces arbres volant et pignon sont reliés ensemble par un troisième arbre, encore appelé arbre intermédiaire, aux extrémités duquel se situent les joints de cardan simples.

Le joint de cardan simple présente en effet l'inconvénient de ne pas être homocinétique. Ainsi, lorsque deux tronçons formant un angle entre eux sont accouplés par un joint de cardan simple, la vitesse de rotation du tronçon mené présente des modulations cycliques par rapport au tronçon menant.

Ainsi, s'il n'a pas été possible de rendre très proches les angles formés entre l'arbre volant et l'arbre intermédiaire d'une part et l'arbre intermédiaire et l'arbre pignon d'autre part, ces angles étant appelés angles de brisure, par exemple lorsque l'écart entre ces angles de brisure est supérieur à 3°, le couple de pignon étant globalement constant, ces modulations sont transmises au volant et sont donc ressenties par le conducteur. Cela est encore le cas s'il n'a pas été possible de caler angulairement les deux joints de cardan l'un par rapport à l'autre autour de l'axe de l'arbre intermédiaire à un angle de calage inférieur ou égal à un angle de calage seuil égal à un angle de calage optimal majoré de 5°, l'angle de calage optimal permettant d'annuler la modulation introduite par lesdits joints de cardan.

Cela peut être particulièrement désagréable pour ce dernier qui ressentira, en tournant le volant, une succession de points durs et de points mous qui lui donneront l'impression que le braquage des roues n'est pas régulier.

Le document US2007/107977, considéré comme l'état de la technique le plus proche, montre un ensemble selon le préambule de la revendication 1.

PRESENTATION DE L'INVENTION

La présente invention a pour but de pallier les inconvénients précédemment cités, notamment en proposant un ensemble pour véhicule automobile dans lequel l'intensité du courant électrique délivré à la direction assistée électrique est déterminée à partir de l'angle de rotation du volant et du couple de pignon mesurés, l'invention étant definie par les caractéristiques de la revendication 1.

Plus précisément, l'invention a pour objet un ensemble pour véhicule automobile s'étendant suivant une direction d'extension longitudinale, comprenant :

- un boîtier de direction comprenant une crémaillère s'étendant suivant une direction transversale et destinée à être reliée à des roues du véhicule automobile,
- une colonne de direction comprenant :

  ∘ un pignon configuré pour appliquer à ladite crémaillère un couple de pignon de sorte à entraîner en translation la crémaillère suivant la direction transversale ;

∘ un volant configuré pour appliquer à la colonne de direction un couple de volant ;

∘ des premiers moyens de mesure configurés pour mesurer un angle de rotation de la colonne de direction par rapport à une position angulaire de référence correspondant à un angle nul de rotation du volant ou du pignon et dans laquelle le véhicule automobile roule en ligne droite ;

∘ des deuxièmes moyens de mesure configurés pour mesurer le couple de pignon ;

- une direction assistée électrique comprenant un moteur électrique configuré pour convertir une intensité d'un courant électrique délivrée au moteur électrique, dite intensité d'assistance, en un couple d'assistance ou un effort d'assistance à appliquer sur la crémaillère ;

- un dispositif de commande de la direction assistée configuré pour déterminer, au moins à partir du couple de pignon mesuré, l'intensité d'assistance à délivrer au moteur électrique de la direction assistée électrique ;

- au moins un dispositif de modulation de la relation entre le couple de pignon et le couple de volant, le couple de volant étant égal au couple de pignon corrigé d'au moins un terme de modulation variable en fonction d'au moins l'angle de rotation de la colonne de direction ;

Selon l'invention, l'intensité d'assistance est déterminée à partir du couple de volant calculé au moins en fonction du couple de pignon mesuré et du terme de modulation.

Selon différents modes de réalisation de l'invention, qui pourront être pris ensemble ou séparément :

- l'angle de rotation de la colonne de direction correspond à un angle de rotation du volant ou à l'angle de rotation du pignon ;

- l'angle de rotation de la colonne de direction correspond à un angle de rotation du pignon ;

- l'intensité d'assistance est déterminée de sorte que le couple de volant demeure inférieur ou égal à une borne prédéterminée ;

- selon l'invention, la colonne de direction comprend un arbre de direction divisé en au moins trois tronçons articulés, lesdits tronçons étant accouplés par l'intermédiaire de joints de cardan simples, un tronçon supérieur s'étendant suivant un premier axe de rotation et sur lequel est fixé le volant, un tronçon inférieur s'étendant suivant un deuxième axe de rotation et sur lequel le pignon est monté solidaire en rotation autour du deuxième axe de rotation et un tronçon intermédiaire s'étendant suivant un troisième axe de rotation, le tronçon intermédiaire étant relié à chacune de ses extrémité, au tronçon supérieur et au tronçon inférieur par l'intermédiaire d'un joint de cardan simple ;

et

- des angles, dits angles de brisure, formés entre le tronçon supérieur et le tronçon intermédiaire d'une part et le tronçon intermédiaire et le tronçon inférieur d'autre part, sont égaux à 3° près ;

et/ou

les joints de cardan sont calés angulairement l'un par rapport à l'autre autour du troisième axe de rotation de sorte à former entre eux un angle de calage inférieur ou égal à un angle de calage seuil égal à un angle de calage optimal majoré de 5°, l'angle de calage optimal correspondant à un angle de calage formé entre les joints de cardan autour du troisième axe de rotation annulant une modulation de la relation entre le couple de pignon et le couple de volant introduite par les joints de cardan ;

et

- la colonne de direction comprend en outre des moyens de correction configurés pour appliquer au tronçon supérieur d'arbre un couple correctif autour du premier axe de rotation, le couple correctif étant d'intensité variable en fonction de l'angle de rotation de la colonne de direction ;

et

- le dispositif de commande de l'invention est configuré pour :

∘ calculer un couple de volant défini tel que : $C_v(\alpha_v) = C_p + M(\alpha_v)$, où $C_p$ est le couple de pignon mesuré, M le terme de modulation, et $\alpha_v$ est l'angle de rotation de la colonne de direction, M étant égal au couple correctif qui est une fonction prédéterminée de l'angle de rotation de la colonne de direction ;

∘ déterminer, à partir du couple de volant ainsi calculé, l'intensité d'assistance à appliquer au moteur électrique de la direction assistée électrique ;

- le terme de modulation M est défini tel que $M(\alpha_v) = 1 + A \times \sin(2 \times \alpha_v + \varphi)$, où A est une première constante de modulation prédéterminée non nulle et $\varphi$ est une deuxième constante de modulation prédéterminée ;

- le terme de modulation M est défini tel que $M(\alpha_v) = 1 + \sin(2 \times \alpha_v + \varphi) + \sin(4 \times \alpha_v + \varphi'))$, où $\varphi$ est une première constante de modulation prédéterminée et $\varphi'$ est une deuxième constante de modulation prédéterminée ;

- la colonne de direction comprend un arbre de direction divisé en au moins trois tronçons articulés, lesdits tronçons étant accouplés par l'intermédiaire de joints de cardan simples, un tronçon supérieur s'étendant suivant un premier axe de rotation et sur lequel est fixé le volant, un tronçon inférieur s'étendant suivant un deuxième axe de rotation et sur lequel le pignon est monté solidaire en rotation autour du deuxième axe de rotation et un tronçon intermédiaire s'étendant suivant un troisième axe de rotation, le tronçon intermédiaire étant relié à chacune de ses extrémité, au tronçon supérieur et au tronçon inférieur par l'intermédiaire d'un joint de cardan simple ;

et

- des angles, dits angles de brisure, formés entre le tronçon supérieur et le tronçon intermédiaire d'une part et le tronçon intermédiaire et le tronçon inférieur d'autre part, ne sont pas égaux à 3° près ;

et/ou

les joints de cardan sont calés angulairement l'un par rapport à l'autre autour du troisième axe de rotation de sorte à former entre eux un angle de calage supérieur à un angle de calage seuil, l'angle de calage seuil étant égal à un angle de calage optimal majoré de 5°, l'angle de calage optimal correspondant à un angle de calage formé entre les joints de cardan autour du troisième axe de rotation annulant une modulation de la relation entre le couple de pignon et le couple de volant introduite par les joints de cardan ;

et

- le dispositif de commande est configuré pour :

  ○ calculer un couple de volant tel que : $C_v(\alpha_v) = C_p \times M(\alpha_v)$, où $C_p$ est le couple de pignon mesuré, M est le terme de modulation, et $\alpha_v$ est l'angle de rotation de la colonne de direction, M étant une fonction périodique de l'angle de rotation de la colonne de direction de période d'un demi-tour de volant ;

  ○ déterminer, à partir du couple de volant ainsi calculé, l'intensité d'assistance à appliquer au moteur électrique de la direction assistée électrique ;

- la colonne de direction comprend un arbre de direction divisé en au moins trois tronçons articulés, lesdits tronçons étant accouplés par l'intermédiaire de joints de cardan simples, un tronçon supérieur s'étendant suivant un premier axe de rotation et sur lequel est fixé le volant, un tronçon inférieur s'étendant suivant un deuxième axe de rotation et sur lequel le pignon est monté solidaire en rotation autour du deuxième axe de rotation et un tronçon intermédiaire s'étendant suivant un troisième axe de rotation, le tronçon intermédiaire étant relié à chacune de ses extrémité, au tronçon supérieur et au tronçon inférieur par l'intermédiaire d'un joint de cardan simple

et

- des angles, dits angles de brisure, formés entre le tronçon supérieur et le tronçon intermédiaire d'une part et le tronçon intermédiaire et le tronçon inférieur d'autre part, ne sont pas égaux à 3° près ;

et/ou

les joints de cardan sont calés angulairement l'un par rapport à l'autre autour du troisième axe de rotation de sorte à former entre eux un angle de calage supérieur à un angle de calage seuil, l'angle de calage seuil étant égal à un angle de calage optimal majoré de 5°, l'angle de calage optimal correspondant à un angle de calage formé entre les joints de cardan autour du troisième axe de rotation annulant une modulation de la relation entre le couple de pignon et le couple de volant introduite par les joints de cardan ;

et

- la colonne de direction comprend en outre des moyens de correction configurés pour appliquer au tronçon supérieur un couple correctif autour du premier axe de rotation, le couple correctif étant d'intensité variable en fonction de l'angle de rotation de la colonne de direction ;

et

- le dispositif de commande est configuré pour :

  ○ calculer un couple de volant tel que : $C_v(\alpha_v) = C_p \times M_1(\alpha_v) + M_2(\alpha_v)$, où $C_p$ est le couple de pignon mesuré, $M_1$ est un premier terme de modulation, $M_2$ est un deuxième terme de modulation, et $\alpha_v$ est l'angle de rotation de la colonne de direction, $M_1$ étant une fonction périodique de l'angle de rotation de la colonne de direction de période d'un demi-tour de volant, $M_2$ étant égal au couple correctif qui est une fonction prédéterminée de l'angle de rotation de la colonne de direction ;

  ○ déterminer, à partir du couple de volant ainsi calculé, l'intensité d'assistance à appliquer au moteur électrique de la direction assistée électrique ;

- le premier terme de modulation $M_1$ est défini tel que $M_1(\alpha_v) = 1 + A \times \sin(2 \times \alpha_v + \varphi)$, où A est une première constante de modulation prédéterminée non nulle et $\varphi$ est une deuxième constante de modulation prédéterminée ;

- le premier terme de modulation $M_1$ est défini tel que $M_1(\alpha_v) = 1 + \sin(2 \times \alpha_v + \varphi) + \sin(4 \times \alpha_v + \varphi')$, où $\varphi$ est une première constante de modulation prédéterminée et $\varphi'$ est une deuxième constante de modulation prédéterminée ;

- optionnellement pour le calcul du couple de volant, le couple correctif ($C_1$) est une fonction périodique de période un tour de volant (22), qui est approché par un couple correctif estimé ($C_1'$) défini tel que : $C_1'(\alpha_v) = K \times \cos(\alpha_v) \times F_1 \times F_2$, où K est une constante de correction prédéterminée non nulle, $F_1$ est un premier coefficient d'atténuation non nul et $F_2$ est un deuxième coefficient d'atténuation non nul ;

- optionnellement l'ensemble comprend des troisièmes moyens de mesure configurés pour mesurer une vitesse du véhicule automobile, le premier coefficient d'atténuation étant défini de sorte à diminuer de manière continue de 1 à 0 lorsque la vitesse du véhicule automobile augmente ;

- le premier coefficient d'atténuation (F$_1$) est défini tel que : $F_1 = 1 - \dfrac{2}{\pi} \arctan\left(V_{veh} \big/ V_{veh/lim}\right)$, où V$_{veh/lim}$ correspond à une vitesse limite du véhicule automobile prédéterminée et V$_{veh}$ correspond à la vitesse mesurée du véhicule automobile ;

- optionnellement l'ensemble comprend des quatrièmes moyens de mesure configurés pour mesurer une vitesse de braquage des roues du véhicule automobile, le deuxième coefficient d'atténuation étant défini de sorte à augmenter de manière continue de 0 à 1 lorsque la vitesse de braquage des roues augmente ;

- optionnellement le deuxième coefficient d'atténuation (F$_2$) est défini tel que : $F_2 = \dfrac{2}{\pi} \arctan\left(V_b \big/ V_{b/lim}\right)$, où V$_{b/lim}$ correspond à une vitesse limite de braquage des roues prédéterminée et V$_b$ correspond à la vitesse mesurée de braquage des roues du véhicule automobile.

L'invention a aussi pour objet un véhicule automobile comprenant un ensemble tel que précédemment décrit.

L'invention a encore pour objet un procédé pour piloter une direction assistée électrique d'un ensemble pour véhicule automobile tel que précédemment décrit, comprenant les étapes de :

a) mesure de l'angle de rotation de la colonne de direction et du couple de pignon ;
b) calcul, au moins en fonction du couple de pignon mesuré et du terme de modulation, du couple de volant ;
c) détermination, à partir du couple de volant ainsi calculé, de l'intensité d'assistance à délivrer au moteur électrique de la direction assistée électrique ;
d) délivrance de l'intensité d'assistance ainsi déterminée, de sorte à appliquer à la crémaillère un couple d'assistance ou un effort d'assistance tenant compte de l'angle de rotation de la colonne de direction et du couple de pignon.

L'invention concerne encore un programme d'ordinateur comprenant des instructions de code de programme conçues pour exécuter des étapes a) à c) du procédé tel que précédemment décrit, lorsque le programme est exécuté sur un ordinateur.

PRESENTATION DES DESSINS

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés sur lesquels :

- la figure 1 est une vue schématique d'un ensemble pour véhicule automobile selon un premier mode de réalisation de l'invention ;
- la figure 2 est une vue schématique d'un ensemble pour véhicule automobile selon un deuxième mode de réalisation de l'invention ;
- la figure 3 est une vue schématique d'un ensemble pour véhicule automobile selon un troisième mode de réalisation de l'invention ;
- la figure 4 est une vue schématique d'un exemple de dispositif de commande d'une direction assistée de l'ensemble illustré à la figure 2 ;
- la figure 5 est un ordinogramme d'un procédé de pilotage d'une direction assistée électrique de l'un des ensembles illustrés aux figures 1 à 3 ;
- la figure 6 est un graphique représentant un exemple d'évolution du couple de volant ressenti par un conducteur au niveau d'un volant de l'un des ensembles illustrés aux figures 1 à 3, en fonction de l'angle de rotation dudit volant ;
- les figures 7a et 7b sont des vues schématiques d'une première variante de réalisation d'une colonne de direction d'un des ensembles illustrés aux figures 2 et 3 ;
- les figures 8a et 8b sont des vues schématiques d'une deuxième variante de réalisation d'une colonne de direction d'un des ensembles illustrés aux figures 2 et 3.

DESCRIPTION DETAILLEE

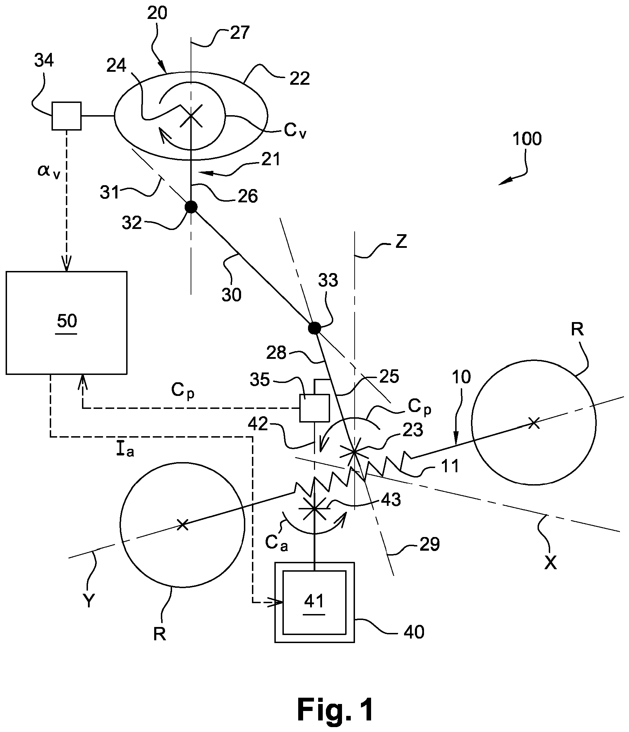

Les figures 1 à 3 montrent un ensemble 100 pour véhicule automobile (non représenté) selon un premier, un deuxième et un troisième mode de réalisation de l'invention respectivement.

On définit à titre préliminaire un repère orthogonal comprenant une direction d'extension principale longitudinale X suivant laquelle le véhicule automobile s'étend, une direction transversale Y et une direction verticale Z. Les directions longitudinale X et transversale Y sont horizontales.

L'ensemble 100 comprend un boîtier de direction 10, une colonne de direction 20, une direction assistée électrique 40 et un dispositif de commande 50 de la direction assistée.

Le boîtier de direction 10 comprend une crémaillère 11 s'étendant suivant la direction transversale Y et destinée à être reliée à des roues R du véhicule automobile, notamment par l'intermédiaire de biellettes (non représentées) actionnant un bras sur chaque porte-fusée.

La crémaillère 11 est configurée pour se déplacer en translation par rapport au véhicule automobile suivant la direction transversale Y, de sorte à entraîner le braquage des roues.

La colonne de direction 20 comprend un arbre de direction 21, un volant 22 et un pignon 23.

L'arbre de direction 21 comprend une extrémité supérieure 24 et une extrémité inférieure 25 opposée. L'arbre de direction 21 comprend ainsi un tronçon supérieur 26 s'étendant suivant un premier axe de rotation 27 et un tronçon inférieur 28 s'étendant suivant un deuxième axe de rotation 29. Le tronçon supérieur 26 comprend l'extrémité supérieure 24 de l'arbre de direction 21, tandis que le tronçon inférieur 28 comprend l'extrémité inférieure 25 de l'arbre de direction 21.

Le premier axe de rotation 27 et le deuxième axe de rotation 29 sont par exemple confondus. L'arbre de direction 21 est dans ce cas monobloc ou encore réalisé d'un seul tenant.

Selon un autre exemple, l'arbre de direction 21 est divisé en au moins trois tronçons articulés. Les tronçons d'arbre sont alors accouplés ensemble par exemple par l'intermédiaire de joints de cardan simples.

L'arbre de direction 21 peut par exemple comprendre un tronçon intermédiaire 30 s'étendant suivant un troisième axe de rotation 31, le tronçon intermédiaire 30 étant reliée à chacune de ses extrémités, à un premier tronçon, par exemple le tronçon supérieur 26, et à un deuxième tronçon, par exemple le tronçon inférieur 28, par l'intermédiaire d'un joint de cardan 32, 33 simple. Le troisième axe de rotation 30 est par exemple ni parallèle ni confondu avec les premier et deuxième axes de rotation 27, 29.

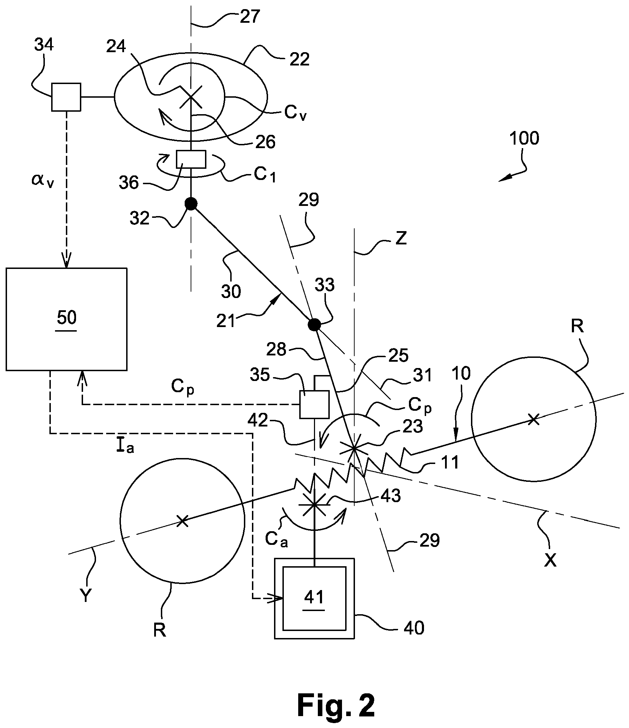

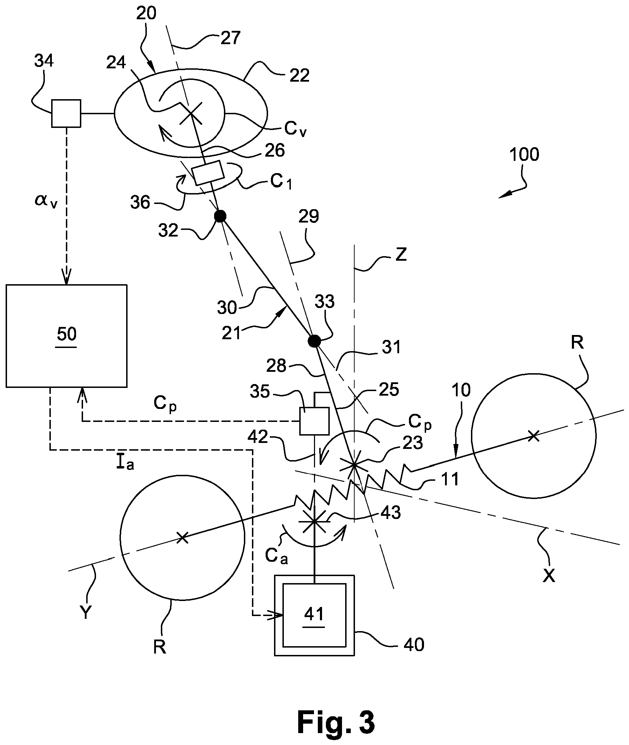

Le premier axe de rotation 27 et le deuxième axe de rotation 29 sont par exemple parallèles (figure 3). Le premier axe de rotation 27 et le deuxième axe de rotation 29 peuvent aussi n'être ni confondus ni parallèles (figures 1 et 2).

Le volant 22 est fixé à l'extrémité supérieure 24 de la colonne de direction 20.

Plus précisément, le volant 22 est fixé à l'extrémité supérieure 24 de l'arbre de direction 21.

Le volant 22 est configuré pour appliquer à l'extrémité supérieure 24 de la colonne de direction 20 un couple de volant $C_v$.

Plus précisément, le volant 22 est configuré pour pivoter par rapport au véhicule automobile autour du premier axe de rotation 27 et pour entraîner en rotation le tronçon supérieur 26 de l'arbre de direction 21 autour du premier axe de rotation 27. Le volant 22 est en outre configuré pour appliquer sur l'arbre de direction 21 un couple de volant $C_v$ autour du premier axe de rotation 27.

Le pignon 23 est monté solidaire en rotation avec l'extrémité inférieure 25 de la colonne de direction 20.

Plus précisément, le pignon 23 est monté solidaire en rotation avec l'extrémité inférieure 25 de l'arbre de direction 21, de sorte que l'arbre de direction 21 entraîne le pignon 23 en rotation autour du deuxième axe de rotation 29.

Le pignon 23 est en outre configuré pour appliquer à ladite crémaillère 11 un couple de pignon $C_p$, de sorte à entraîner en translation la crémaillère 11 suivant la direction transversale Y.

Le pignon 23 applique par exemple sur la crémaillère 11 un couple de pignon $C_p$ autour du deuxième axe de rotation 29. En particulier, le pignon 23 applique sur la crémaillère un effort transversal issu du couple de pignon $C_p$.

La colonne de direction 20 comprend en outre des premiers moyens de mesure 34 configurés pour mesurer un angle de rotation de la colonne de direction par rapport à une position angulaire de référence correspondant à un angle nul de rotation du volant ou du pignon et dans laquelle le véhicule automobile roule en ligne droite.

L'angle de rotation de la colonne de direction correspond par exemple à un angle de rotation du volant $\alpha_v$. Les premiers moyens de mesure 34 sont par exemple configurés pour mesurer ledit angle de rotation du volant $\alpha_v$ autour du premier axe de rotation 27. La position angulaire de référence correspond alors à un angle nul de rotation du volant dans laquelle le véhicule automobile roue en ligne droite.

En variante, l'angle de rotation de la colonne de direction correspond à un angle de rotation du pignon. Les premiers moyens de mesure 34 sont par exemple configurés pour mesurer ledit angle de rotation du pignon autour du deuxième axe de rotation 29. La position angulaire de référence correspond alors à un angle nul de rotation du pignon dans laquelle le véhicule automobile roue en ligne droite.

La colonne de direction 20 comprend aussi des deuxièmes moyens de mesure 35 configurés pour mesurer le couple de pignon $C_p$. Les deuxièmes moyens de mesure 35 sont par exemple un capteur de couple installé sur le tronçon inférieur 28 en regard du pignon 23, notamment entre le pignon 23 et le joint de cardan 33 à un endroit faisant partie de la colonne de direction.

La direction assistée électrique 40 comprend un moteur électrique 41 configuré pour convertir une intensité $I_a$ d'un courant électrique délivrée au moteur électrique 41, dite intensité d'assistance, en un couple d'assistance $C_a$ à appliquer.

Le moteur électrique 41 est par exemple configuré pour appliquer sur la crémaillère 11, par l'intermédiaire d'un pignon 43 ou d'un autre moyen, le couple d'assistance $C_a$ autour d'un quatrième axe de rotation 42, de sorte à entraîner en translation la crémaillère 11 suivant la direction transversale Y et ainsi assister le pignon 23.

L'ensemble 100 comprend en outre au moins un dispositif de modulation de la relation entre le couple de pignon $C_p$ et le couple de volant $C_v$, le couple de volant $C_v$ étant égal au couple de pignon corrigé d'au moins un terme de modulation variable en fonction d'au moins l'angle de rotation de la colonne de direction, notamment d'au moins l'angle de rotation du volant $\alpha_v$ ou d'au moins l'angle de rotation du pignon.

Le dispositif de modulation peut par exemple comprendre le tronçon supérieur 26, le tronçon intermédiaire 30, le tronçon inférieur 28 et les joints de cardan 32, 33. Dans ce cas, c'est l'agencement géométrique de ces éléments qui peut introduire une modulation de la relation entre le couple de pignon $C_p$ et le couple de volant $C_v$.

On définit des angles, dits angles de brisure, formés entre le tronçon supérieur 26 et le tronçon intermédiaire 30 d'une part et entre le tronçon intermédiaire 30 et le tronçon inférieur 28 d'autres. Autrement dit, ces angles de brisure sont formés entre le premier axe de rotation 27 et le troisième axe de rotation 31 d'une part et entre le troisième axe de rotation 31 et le deuxième axe de rotation 29 d'autre part. Ces angles de brisure sont introduits par les joints de cardan 32, 33. Des ensembles 100 comprenant un agencement géométrique de la colonne de direction 20 introduisant une modulation de la relation entre le couple de pignon $C_p$ et le couple de volant $C_v$ sont par exemple illustrés aux figures 1 et 2.

Les joints de cardan 32, 33 simples n'étant pas homocinétiques, lorsque l'angle de de brisure entre deux tronçons adjacents n'est pas nul, la vitesse de rotation du tronçon mené de l'arbre de direction 21, par exemple le tronçon inférieur 28 et/ou le tronçon intermédiaire 30, présente des modulations cycliques par rapport au tronçon menant de l'arbre de direction 21, par exemple le tronçon intermédiaire 30 et/ou le tronçon supérieur 26.

Ainsi, lorsque les angles de brisure formés entre les tronçons supérieur et intermédiaire 26, 30 et entre les tronçons intermédiaire et inférieur 30, 28 ne sont pas sensiblement égaux, c'est-à-dire qu'ils ne sont pas égaux à 3° près, de préférence à 2° près, ou encore qu'ils présentent l'un par rapport à l'autre un écart supérieur à 3°, de préférence 2°, ces modulations cycliques ne sont pas compensées et le mouvement de rotation n'est pas homocinétique.

Ces modulations cycliques varient en fonction au moins de l'angle de rotation de la colonne de direction, notamment au moins de l'angle de rotation du volant $\alpha_v$ ou au moins de l'angle de rotation du pignon. Ces modulations cycliques sont détaillées plus loin dans la description.

Au surplus ou en variante, les premier axe de rotation 27 et deuxième axe de rotation 29 sont rarement coplanaires si bien que les joints de cardan 32, 33 peuvent aussi être calés angulairement, l'un par rapport à l'autre, autour du troisième axe de rotation 31 de sorte à former entre eux un angle de calage supérieur à un angle de calage seuil. L'angle de calage seuil est égal à un angle de calage optimal majoré de 5°, de préférence majoré de 4°, l'angle de calage optimal étant lui-même défini comme étant un angle de calage formé entre les joints de cardan 32, 33 autour du troisième axe de rotation 31 annulant la modulation de la relation entre le couple de pignon $C_p$ et le couple de volant $C_v$ introduite par les joints de cardan 32, 33. L'angle de calage optimal est strictement positif.

De même que précédemment, dans le cas où les joints de cardan 32, 33 sont montés sur le tronçon intermédiaire 30 de sorte à former entre eux autour du troisième axe de rotation 31 un angle de calage supérieur à l'angle de calage seuil, les modulations cycliques introduites par les joints de cardan 32, 33 entre les tronçons 26, 30, 28 de l'arbre de direction 21 ne sont pas compensées et le mouvement de rotation n'est pas homocinétique.

Ces modulations cycliques varient aussi en fonction au moins de l'angle de rotation de la colonne de direction, notamment d'au moins de l'angle de rotation du volant $\alpha_v$ ou d'au moins de l'angle de rotation du pignon. Ces modulations cycliques sont détaillées plus loin dans la description.

Le dispositif de modulation peut comprendre, en addition ou en alternative des exemples de réalisation décrits ci-dessus, des moyens de correction 36 configurés pour appliquer au tronçon supérieur 26 de l'arbre de direction 21 un couple correctif $C_1$ autour du premier axe de rotation 27, le couple correctif $C_1$ étant d'intensité variable en fonction de l'angle de rotation de la colonne de direction, notamment de l'angle de rotation du volant $\alpha_v$ ou de l'angle de rotation du pignon. Le couple correctif $C_1$ introduit ainsi une modulation de la relation entre le couple de pignon $C_p$ et le couple de volant $C_v$. Des ensembles 100 comprenant des moyens de correction 36 sont par exemple illustrés aux figures 2 et 3.

Les moyens de correction 36 peuvent en outre être configurés pour appliquer au tronçon supérieur 26 un couple correctif $C_1$ non nul autour du premier axe de rotation 27, lorsque le véhicule automobile roule en ligne droite. Le couple correctif $C_1$ permet ainsi de corriger une déviation du véhicule automobile en ligne droite due au dévers d'une route. Ainsi, le couple correctif $C_1$ est particulièrement avantageux, lorsque le véhicule automobile roule en ligne droite et donc que le conducteur n'a pas à appliquer de couple au volant 22 pour rouler en ligne droite. En revanche, ce couple correctif $C_1$ devient gênant, lorsque le conducteur a besoin de beaucoup tourner le volant 22. Cela est par exemple le cas à faibles vitesses, lorsqu'un couple important est à fournir pour braquer les roues R, notamment lors de manœuvres en parking ou de virages à un coin de rue. En effet, le conducteur ressent alors une alternance de points durs et de points mous, lorsqu'il tourne le volant 22.

Des exemples de moyens de correction 36 seront développés dans la suite de la description.

Le dispositif de commande 50 de la direction assistée est configuré pour :

- calculer le couple de volant $C_v$ au moins en fonction du couple de pignon $C_p$ mesuré et du terme de modulation ;
- déterminer, à partir du couple de volant $C_v$ ainsi cal-

culé, l'intensité d'assistance $I_a$ à délivrer au moteur électrique 41 de la direction assistée électrique 40 ;
- délivrer l'intensité d'assistance $I_a$ ainsi déterminée au moteur électrique 41 de la direction assistée électrique 40.

De cette manière, le moteur électrique 41 de la direction assistée électrique 40 applique sur la crémaillère 11 un couple d'assistance $C_a$ ou un effort d'assistance tenant compte, en plus du couple de pignon $C_p$ mesuré, de l'angle de rotation de la colonne de direction, notamment de l'angle de rotation du volant $\alpha_v$ ou de l'angle de rotation du pignon, via le terme de modulation appliqué pour le calcul du couple de volant $C_v$. L'ensemble 100 permet ainsi d'obtenir un asservissement du couple d'assistance $C_a$ au couple de volant $C_v$ et non plus au couple de pignon $C_p$ comme cela était le cas dans l'art antérieur. Autrement dit, en introduisant le terme de modulation en plus du couple de pignon $C_p$ mesuré pour déterminer le couple d'assistance $C_a$ à fournir à la crémaillère 11, l'ensemble 100 permet de commander le couple de volant $C_v$ ressenti par le conducteur au niveau du volant 22 et non plus le couple de pignon $C_p$. Les modulations du couple de pignon $C_p$ sont compensées par le couple d'assistance $C_a$.

L'intensité d'assistance $I_a$ est par exemple déterminée de sorte que le couple de volant $C_v$ ne dépasse pas une borne supérieure S déterminée. La borne S déterminée est généralement très inférieure au couple nécessaire au niveau des roues. De ce fait, un couple d'assistance $C_a$ est produit après seulement un faible angle de rotation de la colonne de direction, notamment après seulement un faible angle de rotation du volant $\alpha_v$ ou un faible angle de rotation du pignon. Ceci permet au couple d'assistance $C_a$ de compenser les modulations de couple de pignon $C_p$ sur toute leur amplitude sans répercussion sur le couple de volant $C_v$.

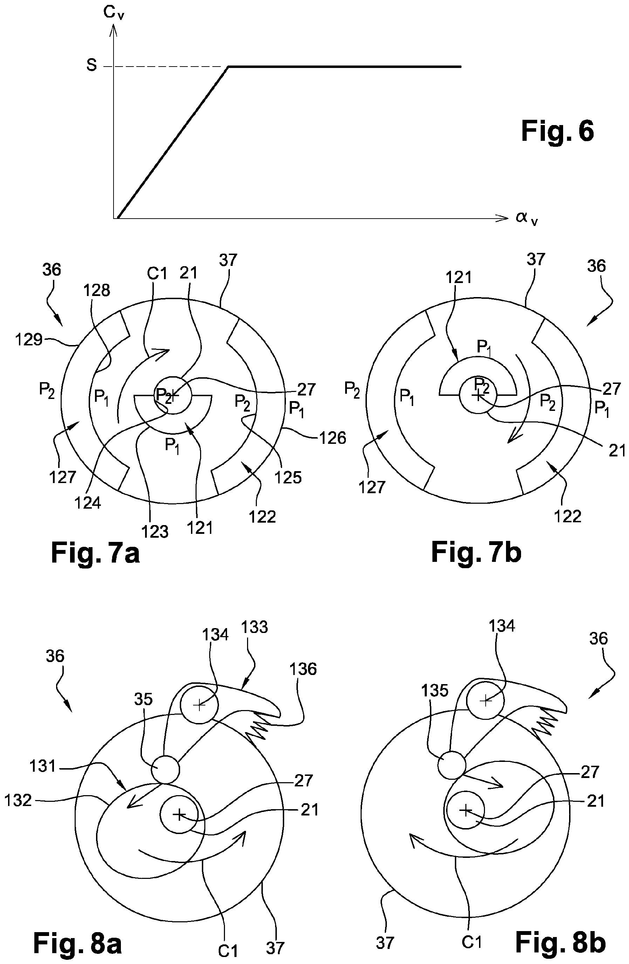

La figure 6 illustre un exemple d'évolution ainsi obtenue du couple de volant $C_v$ en fonction de l'angle de rotation de la colonne de direction, notamment de l'angle de rotation du volant $\alpha_v$. On observe sur cette figure que le couple de volant $C_v$ qui est ressenti par le conducteur augmente progressivement à mesure que ce dernier tourne le volant. Puis, lorsque le couple de volant $C_v$ atteint sa borne supérieure, le couple d'assistance $C_a$ intervient pour que le couple de volant $C_v$ reste égal à la borne supérieure S tant que le conducteur tourne le volant 22. Dans l'art antérieur, c'est au contraire le couple de pignon $C_p$ qui suit une telle évolution.

Cette évolution est obtenue grâce à la loi d'assistance qui fait intervenir en plus du couple de pignon $C_p$ mesuré, le terme de modulation et donc l'angle de rotation de la colonne de direction, notamment de l'angle de rotation du volant $\alpha_v$ ou de l'angle de rotation du pignon. Ainsi, le couple d'assistance $C_a$ se trouve asservi au couple de volant $C_v$ par la loi d'assistance et non plus au seul couple de pignon $C_p$, de sorte que le couple de pignon $C_p$ peut moduler pour obtenir un couple de volant

$C_v$ sensiblement constant lorsque sa borne supérieure S est atteinte.

Cela est particulièrement avantageux, lorsque le véhicule automobile roule à faibles vitesses ou est à l'arrêt et que le conducteur braque les roues R, autrement dit lorsqu'un couple total très important est à fournir à la crémaillère 11 pour braquer les roues R et que le conducteur doit tourner le volant 22 sur une grande plage angulaire, par exemple à plus de 180°. Cela est par exemple le cas lors de manœuvres du véhicule automobile dans un parking ou de virages à un coin de rue. En effet, le couple de volant $C_v$ étant dans ces conditions sensiblement constant, le conducteur aura la sensation, via le volant 22, d'un braquage régulier des roues R. On entend par « faibles vitesses », des vitesses comprises entre 0 et 15km/h, en particulier entre 0 et 10km/h.

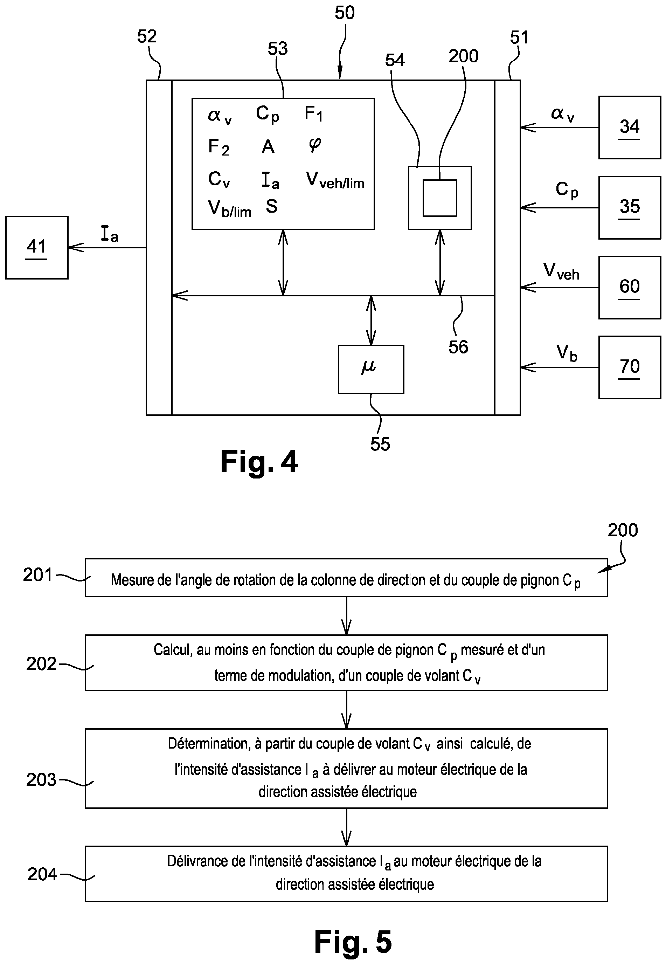

La figure 4 montre un exemple de dispositif de commande 50 selon un mode de réalisation de l'invention.

Le dispositif de commande 50 comprend une interface d'entrée 51 reliée aux premiers et deuxièmes moyens de mesure 14, 15, une interface de sortie 52 reliée à la direction assistée électrique 40, une mémoire de données 53, une mémoire de programmes 54, un calculateur 55 et au moins un bus de communication 56 les reliant les uns aux autres.

L'angle de rotation de la colonne de direction, notamment l'angle de rotation du volant $\alpha_v$ ou l'angle de rotation du pignon, et le couple de pignon $C_p$ sont par exemple enregistrés dans la mémoire de données 53, lorsqu'ils sont mesurés par les premier et deuxième moyens de mesure 34, 35. L'intensité d'assistance $I_a$ est par exemple enregistrée dans la mémoire de données 53, lorsqu'elle est déterminée par le dispositif de commande 50. Le couple de volant $C_v$ est par exemple enregistré dans la mémoire de données 53 du dispositif de commande 50, lorsqu'il est calculé par le dispositif de commande 50. La borne supérieure S pour le couple de volant $C_v$ est par exemple préenregistrée dans la mémoire de données 53.

Les étapes mises en œuvre par le dispositif de commande 50 sont par exemple préenregistrées dans la mémoire de programmes 44 et sont par exemple exécutées par le calculateur 55.

Premier mode de réalisation : la modulation entre le couple de pignon $C_p$ et le couple de volant $C_v$ est introduite par l'agencement géométrique de la colonne de direction 20 seule, sans les moyens de correction 36

Selon un premier mode de réalisation de l'invention, les angles de brisure formés entre les tronçons supérieur et intermédiaire 26, 30 et entre les tronçons intermédiaire et inférieur 30, 28 ne sont pas sensiblement égaux (c'est-à-dire ne sont pas égaux à 3° près, de préférence à 2° près, ou encore présentent un écart l'un par rapport à l'autre supérieur à 3°, de préférence à 2°) et/ou les joints de cardan 32, 33 sont calés angulairement, l'un par rapport à l'autre, autour du troisième axe de rotation 31 de sorte à former un angle de calage supérieur à l'angle de calage seuil.

Le premier mode de réalisation est par exemple illustré à la figure 1.

Le dispositif de commande 50 est configuré pour :

- calculer le couple de volant $C_v$ tel que : $C_v(\alpha_v) = C_p \times M(\alpha_v)$, où $C_p$ est le couple de pignon mesuré et M est le terme de modulation,
  M étant une fonction périodique de l'angle de rotation de la colonne de direction, notamment de l'angle de rotation du volant $\alpha_v$ ou de l'angle de rotation du pignon, de période un demi-tour de volant 22. Par exemple, le terme de modulation M est défini tel que : $M(\alpha_v) = 1 + A \times \sin(2 \times \alpha_v + \varphi)$, où A est une première constante de modulation prédéterminée non nulle et $\varphi$ est une deuxième constante de modulation prédéterminée ;
- déterminer, à partir du couple de volant $C_v$ ainsi calculé, l'intensité d'assistance $I_a$ à appliquer au moteur électrique 41 de la direction assistée électrique 40.

De cette manière, la loi d'assistance tient compte des modulations introduites par l'arbre de direction 21, et plus précisément par les joints de cardan simples installés entre les tronçons 26, 28, 30 dudit arbre de direction 21.

La première et la deuxième constante de modulation A, $\varphi$ sont par exemple préenregistrées dans la mémoire de données 53 du dispositif de commande 50, notamment sous la forme de tables.

Les première et deuxième constantes de modulation A et $\varphi$ sont par exemple prédéterminées en fonction du réglage de la colonne de direction 20. En particulier, on pourra prendre en compte le réglage en hauteur de la colonne qui peut faire varier les angles de brisure introduits par les joints cardans 32 et 33. La hauteur de la colonne correspond à l'angle formé entre le premier axe de rotation 27 et l'horizontale. Cela est notamment permis si la hauteur de colonne est une donnée disponible pour le véhicule automobile.

De préférence, la première constante de modulation A est strictement inférieure à 0.2. Cela permet d'améliorer l'approximation réalisée du terme de modulation M.

En variante, le terme de modulation M est défini tel que : $M(\alpha_v) = 1 + \sin(2 \times \alpha_v + \varphi) + \sin(4 \times \alpha_v + \varphi')$, où $\varphi$ est une première constante de modulation prédéterminée et $\varphi'$ est une deuxième constante de modulation prédéterminée.

Une telle approximation du terme de modulation M permet de mieux compenser la modulation introduite par les joints de cardan 32, 33, lorsque les taux de modulation sont élevés.

La première et la deuxième constantes de modulation $\varphi$, $\varphi'$ peuvent par exemple être préenregistrées dans la mémoire de données 53 du dispositif de commande 50.

Deuxième mode de réalisation : la modulation entre le couple de pignon $C_p$ et le couple de volant $C_v$ est introduite par l'agencement géométrique de la colonne de direction 20 et les moyens de correction 36

Selon un deuxième mode de réalisation de l'invention :

- les angles de brisure formés entre les tronçons supérieur et intermédiaire 26, 30 et entre les tronçons intermédiaire et inférieur 30, 28 ne sont pas sensiblement égaux (c'est-à-dire ne sont pas égaux à 3° près, de préférence à 2° près, ou encore présentent un écart l'un par rapport à l'autre supérieur à 3°, de préférence à 2°) et/ou les joints de cardan 32, 33 sont calés angulairement, l'un par rapport à l'autre, autour du troisième axe de rotation 31 de sorte à former un angle de calage supérieur à l'angle de calage seuil ; et
- la colonne de direction 20 comprend des moyens de correction 36 configurés pour appliquer au tronçon supérieur 26 de l'arbre de direction 21 un couple correctif $C_1$ autour du premier axe de rotation 27, le couple correctif $C_1$ étant d'intensité variable en fonction de l'angle de rotation de la colonne de direction, notamment de l'angle de rotation du volant $\alpha_v$ ou de l'angle de rotation du pignon. Des exemples de moyens de correction 36 seront développés dans la suite de la description.

Le deuxième mode de réalisation est par exemple illustré à la figure 2.

Le dispositif de commande 50 est configuré pour :

- calculer le couple de volant $C_v$ tel que : $C_v(\alpha_v) = C_p \times M_1(\alpha_v) + M_2(\alpha_v)$, où $C_p$ est le couple de pignon mesuré, $M_1$ est un premier terme de modulation et $M_2$ est un deuxième terme de modulation,
  $M_1$ étant une fonction périodique de l'angle de rotation de la colonne de direction, notamment de l'angle de rotation du volant $\alpha_v$ ou de l'angle de rotation du pignon, de période un demi-tour de volant 22, le premier terme de modulation $M_1$ étant par exemple défini tel que : $M_1(\alpha_v) = 1 + A \times \sin(2 \times \alpha_v + \varphi)$, où A est une première constante de modulation prédéterminée non nulle et $\varphi$ est une deuxième constante de modulation prédéterminée,
  $M_2$ étant égal au couple correctif $C_1$ qui est une fonction prédéterminée de l'angle de rotation de la colonne de direction, notamment de l'angle de rotation du volant $\alpha_v$ ou de l'angle de rotation du pignon ;
- déterminer, à partir du couple de volant $C_v$ ainsi calculé, l'intensité d'assistance $I_a$ à appliquer au moteur électrique 41 de la direction assistée électrique 40.

De cette manière, la loi d'assistance tient compte des modulations introduites par l'arbre de direction 21, et plus précisément par les joints de cardan simples installés entre les tronçons 26, 28, 30 dudit arbre de direction 21, ainsi que des modulations introduites par les moyens de correction 36.

La première et la deuxième constante de modulation A, $\varphi$ sont par exemple préenregistrées dans la mémoire de données 53 du dispositif de commande 50.

Les première et deuxième constantes de modulation A et $\varphi$ sont par exemple prédéterminées en fonction du réglage de la colonne de direction 20. En particulier, on pourra prendre en compte le réglage en hauteur de la colonne qui peut faire varier les angles de brisure introduits par les joints cardans 32 et 33. La hauteur de la colonne correspond à l'angle formé entre le premier axe de rotation 27 et l'horizontal. Cela est notamment permis si la hauteur de colonne est une donnée disponible pour le véhicule automobile.

De préférence, la première constante de modulation A est strictement inférieure à 0.2. Cela permet d'améliorer l'approximation réalisée du premier terme de modulation $M_1$.

En variante, le premier terme de modulation $M_1$ est défini tel que : $M_1(\alpha_v) = 1 + \sin(2 \times \alpha_v + \varphi) + \sin(4 \times \alpha_v + \varphi')$, où $\varphi$ est une première constante de modulation prédéterminée et $\varphi'$ est une deuxième constante de modulation prédéterminée.

Une telle approximation du premier terme de modulation $M_1$ permet de mieux compenser la modulation introduite par les joints de cardan 32, 33, lorsque les taux de modulation sont élevés.

La première et la deuxième constantes de modulation $\varphi$, $\varphi'$ peuvent par exemple être préenregistrées dans la mémoire de données 53 du dispositif de commande 50.

Pour le calcul du couple de volant $C_v$, le couple correctif $C_1$ est une fonction périodique de période un tour de volant 22. Le couple correctif $C_1$ est par exemple approché par un couple correctif estimé $C_1'$ défini tel: $C_1'(\alpha_v) = K \times \cos(\alpha_v) \times F_1 \times F_2$, où K est une constante de correction prédéterminée non nulle, $F_1$ est un premier coefficient d'atténuation non nul et $F_2$ est un deuxième coefficient d'atténuation non nul. Autrement dit, dans ce cas, le deuxième terme de modulation $M_2$ est défini tel que : $M_2(\alpha_v) = K \times \cos(\alpha_v) \times F_1 \times F_2$.

La constante de correction K est par exemple préenregistrée dans la mémoire de données 53 du dispositif de commande 50, par exemple au moyen de tables.

Dans un premier exemple, le premier et le deuxième coefficients d'atténuation $F_1$ et $F_2$ sont égaux à 1.

Dans un deuxième exemple, l'ensemble 100 comprend en outre des troisièmes moyens de mesure 60 configurés pour mesurer une vitesse du véhicule automobile $V_{veh}$. Le premier coefficient d'atténuation $F_1$ est défini de sorte à diminuer de 1 à 0 de manière continue quand la vitesse du véhicule $V_{veh}$ augmente. Une telle fonction peut se mettre sous la forme du type : $F_1 = 1 - \frac{2}{\pi}\arctan\left(V_{veh}/V_{veh/lim}\right)$, où $V_{veh/lim}$ correspond à une vitesse limite du véhicule automobile prédéterminée.

De cette manière, le premier coefficient d'atténuation $F_1$ tend vers 0 à mesure que la vitesse du véhicule automobile $V_{veh}$ augmente au-delà de la vitesse limite du véhicule automobile $V_{veh/lim}$. A l'inverse, le premier coefficient d'atténuation F1 tend vers 1 à mesure que la vitesse du véhicule automobile $V_{veh}$ diminue en dessous de la vitesse limite du véhicule automobile $V_{veh/lim}$. Autrement dit, les variations du couple correctif $C_1$ par rapport à l'angle de rotation de la colonne de direction, notamment l'angle de rotation du volant $\alpha_v$ ou l'angle de rotation du pignon, ne sont prises en compte pour obtenir la loi d'assistance qu'à faibles vitesses, c'est-à-dire dans des situations où un couple total important est à fournir pour braquer les roues R et donc où le conducteur aura besoin de beaucoup tourner le volant 22. Au contraire, à vitesses élevées, un couple total moins important est à fournir pour braquer les roues R de sorte que le conducteur aura moins à tourner le volant 22 et donc sera moins susceptible de ressentir les variations du couple correctif $C_1$ par rapport à l'angle de rotation de la colonne de direction, notamment l'angle de rotation du volant $\alpha_v$ ou l'angle de rotation du pignon.

Cela a pour avantage aussi de réduire la consommation énergétique, la direction assistée électrique 40 ne tenant compte du terme de modulation qu'à faibles vitesses, lorsque le conducteur est particulièrement susceptible de ressentir les variations du couple correctif $C_1$ par rapport à l'angle de rotation de la colonne de direction, notamment de l'angle de rotation du volant $\alpha_v$ ou de l'angle de rotation du pignon.

La vitesse du véhicule automobile $V_{veh}$ est par exemple enregistrée dans la mémoire de données 53 du dispositif de commande 50, lorsqu'elle est mesurée par les troisièmes moyens de mesure 60.

La vitesse limite du véhicule automobile $V_{veh/lim}$ est par exemple comprise entre 5 et 30km/h. La vitesse limite du véhicule automobile $V_{veh/lim}$ est par exemple égale à 10km/h.

La vitesse limite du véhicule automobile $V_{veh/lim}$ est par exemple préenregistrée dans la mémoire de données 53 du dispositif de commande 50.

Le deuxième coefficient d'atténuation $F_2$ est par exemple égal à 1.

Dans un troisième exemple, l'ensemble comprend aussi des quatrièmes moyens de mesure 70 configurés pour mesurer une vitesse de braquage $V_b$ des roues du véhicule automobile, c'est-à-dire la vitesse angulaire de pivotement des roues. Le deuxième coefficient d'atténuation est défini de sorte à augmenter de 0 à 1 de manière continue quand la vitesse de braquage des roues $V_b$ augmente. Une telle fonction peut se mettre

$$F_2 = \frac{2}{\pi}\arctan\left(\frac{V_b}{V_{b/lim}}\right),$$

sous la forme du type :

où $V_{b/lim}$ correspond à une vitesse limite de braquage des roues prédéterminée.

De cette manière, le deuxième coefficient d'atténuation $F_2$ tend vers 1 à mesure que la vitesse de braquage des roues $V_b$ augmente au-delà de la vitesse limite de braquage des roues $V_{b/lim}$. A l'inverse, le deuxième coefficient d'atténuation $F_2$ tend vers 0 à mesure que la vitesse de braquage des roues $V_b$ diminue en dessous de la vitesse limite de braquage des roues $V_{b/lim}$. Autrement dit, les variations du couple correctif $C_1$ par rapport à l'angle de rotation de la colonne de direction, notamment de l'angle de rotation du volant $\alpha_v$ ou de l'angle de rotation du pignon, ne sont prises en compte pour obtenir la loi d'assistance que lorsque les roues R sont en train de braquer, c'est-à-dire lorsque le conducteur est susceptible de ressentir les variations du couple correctif $C_1$ par rapport à l'angle de rotation de la colonne de direction, notamment de l'angle de rotation du volant $\alpha_v$ ou de l'angle de rotation du pignon.

Cela a pour avantage aussi de réduire la consommation énergétique, la direction assistée électrique 40 ne tenant compte du terme de modulation qu'à vitesses de braquage des roues élevées, lorsque le conducteur est particulièrement susceptible de ressentir les variations du couple correctif $C_1$ par rapport à l'angle de rotation de la colonne de direction, notamment de l'angle de rotation du volant $\alpha_v$ ou de l'angle de rotation du pignon.

La vitesse de braquage des roues $V_b$ est par exemple enregistrée dans la mémoire de données 53 du dispositif de commande 50, lorsqu'elle est mesurée par les quatrièmes moyens de mesure 70.

La vitesse limite de braquage des roues $V_{b/lim}$ est par exemple comprise en 20 et 10°/s. La vitesse limite de braquage des roues $V_{b/lim}$ est par exemple égale à 50°/s.

La vitesse limite de braquage des roues $V_{b/lim}$ est par exemple préenregistrée dans la mémoire de données 53 du dispositif de commande 50.

Le premier coefficient d'atténuation $F_1$ est par exemple égal à 1. En variante, le premier coefficient d'atténuation $F_1$ peut être défini comme dans le deuxième exemple.

Troisième mode de réalisation : la modulation entre le couple de pignon $C_p$ et le couple de volant $C_v$ est introduite par les moyens de correction 36 seuls, l'agencement géométrique de la colonne de direction 20 n'introduisant pas lui-même de modulation entre le couple de pignon $C_p$ et le couple de volant $C_v$

Selon un troisième mode de réalisation de l'invention :

- les angles de brisure formés entre les tronçons supérieur et intermédiaire 26, 30 et entre les tronçons intermédiaire et inférieur 30, 28 sont sensiblement égaux (c'est-à-dire sont égaux à 3° près, de préférence à 2° près, ou encore présentent un écart l'un par rapport à l'autre inférieur ou égal à 3°, de préférence à 2°) et les joints de cardan 32, 33 sont calés angulairement, l'un par rapport à l'autre, autour du troisième axe de rotation 31 de sorte à former un angle de calage inférieur ou égal à l'angle de calage seuil,

et

- la colonne de direction 20 comprend les moyens de correction 36 configurés pour appliquer au tronçon supérieur 26 de l'arbre de direction 21 un couple correctif $C_1$ autour du premier axe de rotation 27, le couple correctif $C_1$ étant d'intensité variable en fonction de l'angle de rotation de la colonne de direction, notamment de l'angle de rotation du volant $\alpha_v$ ou de l'angle de rotation du pignon. Des exemples de moyens de correction 36 seront développés dans la suite de la description.

Le troisième mode de réalisation est par exemple illustré à la figure 3.

Le dispositif de commande 50 est configuré pour :

- calculer le couple de volant $C_v$ défini tel que : $C_v(\alpha_v) = C_p + M(\alpha_v)$, où $C_p$ est le couple de pignon mesuré et M le terme de modulation,
  M étant égal au couple correctif $C_1$ qui est une fonction prédéterminée de l'angle de rotation de la colonne de direction, notamment de l'angle de rotation du volant $\alpha_v$ ou de l'angle de rotation du pignon ;
- déterminer, à partir du couple de volant $C_v$ ainsi calculé, l'intensité d'assistance $I_a$ à appliquer au moteur électrique 41 de la direction assistée électrique 40.

De cette manière, la loi d'assistance tient compte des modulations introduites par les moyens de correction 36.

Pour le calcul du couple de volant $C_v$, le couple correctif $C_1$ est une fonction périodique de période un tour de volant 22. Le couple correctif $C_1$ peut être approché par un couple correctif estimé $C_1'$ défini tel que : $C_1'(\alpha_v) = K \times \cos(\alpha_v) \times F_1 \times F_2$, où K est une constante de correction non nulle prédéterminée, $F_1$ est un premier coefficient d'atténuation non nul et $F_2$ est un deuxième coefficient d'atténuation non nul. Autrement dit, dans ce cas, le terme de modulation M est défini tel que : $M(\alpha_v) = K \times \cos(\alpha_v) \times F_1 \times F_2$.

La constante de correction K est par exemple préenregistrée dans la mémoire de données 53 du dispositif de commande 50, par exemple au moyen de tables.

Dans un premier exemple, le premier et le deuxième coefficients d'atténuation $F_1$ et $F_2$ sont égaux

à 1.

Dans un deuxième exemple, l'ensemble 100 comprend en outre des troisièmes moyens de mesure 60 configurés pour mesurer une vitesse du véhicule automobile $V_{veh}$. Le premier coefficient d'atténuation $F_1$ est défini de sorte à diminuer de 1 à 0 de manière continue quand la vitesse du véhicule $V_{veh}$ augmente. Une telle fonction peut se mettre sous la forme du type : $F_1 = 1 - \frac{2}{\pi} \arctan(V_{veh}/V_{veh/lim})$, où $V_{veh/lim}$ correspond à une vitesse limite du véhicule automobile prédéterminée.

De cette manière, le premier coefficient d'atténuation $F_1$ tend vers 0 à mesure que la vitesse du véhicule automobile $V_{veh}$ augmente au-delà de la vitesse limite du véhicule automobile $V_{veh/lim}$. A l'inverse, le premier coefficient d'atténuation $F_1$ tend vers 1 à mesure que la vitesse du véhicule automobile $V_{veh}$ diminue en dessous de la vitesse limite du véhicule automobile $V_{veh/lim}$. Autrement dit, les variations du couple correctif $C_1$ par rapport à l'angle de rotation de la colonne de direction, notamment de l'angle de rotation du volant $\alpha_v$ ou de l'angle de rotation du pignon, ne sont prises en compte pour obtenir la loi d'assistance qu'à faibles vitesses, c'est-à-dire dans des situations où un couple total important est à fournir pour braquer les roues R et donc où le conducteur aura besoin de beaucoup tourner le volant 22. Au contraire, à vitesses élevées, un couple total moins important est à fournir pour braquer les roues R de sorte que le conducteur aura moins à tourner le volant 22 et donc sera moins susceptible de ressentir les variations du couple correctif $C_1$ par rapport à l'angle de rotation de la colonne de direction, notamment de l'angle de rotation du volant $\alpha_v$ ou de l'angle de rotation du pignon.

Cela a pour avantage aussi de réduire la consommation énergétique, la direction assistée électrique 40 ne tenant compte du terme de modulation qu'à faibles vitesses, lorsque le conducteur est particulièrement susceptible de ressentir les variations du couple correctif $C_1$ par rapport à l'angle de rotation de la colonne de direction, notamment de l'angle de rotation du volant $\alpha_v$ ou de l'angle de rotation du pignon.

La vitesse du véhicule automobile $V_{veh}$ est par exemple enregistrée dans la mémoire de données 53 du dispositif de commande 50, lorsqu'elle est mesurée par les troisièmes moyens de mesure 60.

La vitesse limite du véhicule automobile $V_{veh/lim}$ est par exemple comprise entre 5 et 30km/h. La vitesse limite du véhicule automobile $V_{veh/lim}$ est par exemple égale à 10km/h.

La vitesse limite du véhicule automobile $V_{veh/lim}$ est par exemple préenregistrée dans la mémoire de données 53 du dispositif de commande 50.

Le deuxième coefficient d'atténuation $F_2$ est par exemple égal à 1.

Dans un troisième exemple, l'ensemble comprend aussi des quatrièmes moyens de mesure 70 configurés pour mesurer une vitesse de braquage $V_b$ des roues du véhicule automobile, c'est-à-dire la vitesse angulaire de pivotement des roues. Le deuxième coefficient d'atténuation est défini de sorte à augmenter de 0 à 1 de manière continue quand la vitesse de braquage des roues $V_b$ augmente. Une telle fonction peut se mettre sous la forme du type :

$$F_2 = \frac{2}{\pi} \arctan(V_b/V_{b/lim}),$$

où $V_{b/lim}$ correspond à une vitesse limite de braquage des roues prédéterminée.

De cette manière, le deuxième coefficient d'atténuation $F_2$ tend vers 1 à mesure que la vitesse de braquage des roues $V_b$ augmente au-delà de la vitesse limite de braquage des roues $V_{b/lim}$. A l'inverse, le deuxième coefficient d'atténuation $F_2$ tend vers 0 à mesure que la vitesse de braquage des roues $V_b$ diminue en dessous de la vitesse limite de braquage des roues $V_{b/lim}$. Autrement dit, les variations du couple correctif $C_1$ par rapport à l'angle de rotation de la colonne de direction, notamment de l'angle de rotation du volant $\alpha_v$ ou de l'angle de rotation du pignon, ne sont prises en compte pour obtenir la loi d'assistance que lorsque les roues R sont en train de braquer, c'est-à-dire lorsque le conducteur est susceptible de ressentir les variations du couple correctif $C_1$ par rapport à l'angle de rotation de la colonne de direction, notamment de l'angle de rotation du volant $\alpha_v$ ou de l'angle de rotation du pignon.

Cela a pour avantage aussi de réduire la consommation énergétique, la direction assistée électrique 40 ne tenant compte du terme de modulation qu'à vitesses de braquage des roues élevées, lorsque le conducteur est particulièrement susceptible de ressentir les variations du couple correctif $C_1$ par rapport à l'angle de rotation de la colonne de direction, notamment de l'angle de rotation du volant $\alpha_v$ ou de l'angle de rotation du pignon.

La vitesse de braquage des roues $V_b$ est par exemple enregistrée dans la mémoire de données 53 du dispositif de commande 50, lorsqu'elle est mesurée par les quatrièmes moyens de mesure 70.

La vitesse limite de braquage des roues $V_{b/lim}$ est par exemple comprise en 20 et 10°/s. La vitesse limite de braquage des roues $V_{b/lim}$ est par exemple égale à 50°/s.

La vitesse limite de braquage des roues $V_{b/lim}$ est par exemple préenregistrée dans la mémoire de données 53 du dispositif de commande 50.

Le premier coefficient d'atténuation $F_1$ est par exemple égal à 1. En variante, le premier coefficient d'atténuation $F_1$ peut être défini comme dans le deuxième exemple.

Procédé pour piloter la direction assistée électrique 40

La figure 5 montre un procédé 200 pour piloter la direction assistée électrique 40. Le procédé 200 est par exemple mis en œuvre par le dispositif de commande 50. Le procédé 200 est par exemple préenregistré dans la mémoire de programmes 54 du dispositif de commande 50 et est par exemple mise en œuvre par le calculateur 55 du dispositif de commande 50.

Le procédé 200 comprend les étapes de :

- mesure 201 de l'angle de rotation de la colonne de direction, notamment de l'angle de rotation du volant $\alpha_v$ ou de l'angle de rotation du pignon, et du couple de pignon $C_p$ ;
- calcul 202, au moins en fonction du couple de pignon $C_p$ mesuré et du terme de modulation, du couple de volant $C_v$ ;
- détermination 203, à partir du couple de volant $C_v$ ainsi calculé, de l'intensité d'assistance $I_a$ à délivrer au moteur électrique 41 de la direction assistée électrique 40 ;
- délivrance 204 de l'intensité d'assistance $I_a$ ainsi déterminée, de sorte à appliquer à la crémaillère 11 un couple d'assistance $C_a$ tenant compte de l'angle de rotation de la colonne de direction, notamment de l'angle de rotation du volant $\alpha_v$ ou de l'angle de rotation du pignon, et du couple de pignon $C_p$.

L'intensité d'assistance $I_a$ est par exemple déterminée de sorte que le couple de volant $C_v$ demeure inférieur ou égal à une borne supérieure S prédéterminée.

Lorsque les angles de brisure formés entre les tronçons supérieur et intermédiaire 26, 30 et entre les tronçons intermédiaire et inférieur 30, 28 ne sont pas sensiblement égaux et/ou les joints de cardan 32, 33 sont calés angulairement, l'un par rapport à l'autre, autour du troisième axe de rotation 31 de sorte à former un angle de calage supérieur à l'angle de calage seuil, le couple de volant $C_v$ est par exemple calculé tel que : $C_v(\alpha_v) = C_p \times M(\alpha_v)$, où $C_p$ est le couple de pignon mesuré et M est le terme de modulation, M étant une fonction périodique de l'angle de rotation de la colonne de direction, notamment de l'angle de rotation du volant ou de l'angle de rotation du pignon, de période un demi-tour de volant 22. Le terme de modulation M est par exemple défini tel que : $M(\alpha_v) = 1 + A \times \sin(2 \times \alpha_v + \varphi)$, où A est une première constante de modulation prédéterminée non nulle et $\varphi$ est une deuxième constante de modulation prédéterminée.

En variante, le terme de modulation M est défini tel que : $M(\alpha_v) = 1 + \sin(2 \times \alpha_v + \varphi) + \sin(4 \times \alpha_v + \varphi')$, où $\varphi$ est une première constante de modulation prédéterminée et $\varphi'$ est une deuxième constante de modulation prédéterminée.

Lorsque les angles de brisure formés entre les tronçons supérieur et intermédiaire 26, 30 et entre les tronçons intermédiaire et inférieur 30, 28 ne sont pas sensiblement égaux et/ou les joints de cardan 32, 33 sont calés angulairement, l'un par rapport à l'autre, autour du troisième axe de rotation 31 de sorte à former un angle de calage supérieur à l'angle de calage seuil et que la colonne de direction 20 comprend en outre les moyens de correction 36, le couple de volant $C_v$ est par exemple calculé tel que : $C_v(\alpha_v) = C_p \times M_1(\alpha_v) + M_2(\alpha_v)$, où $C_p$ est le couple de pignon mesuré, $M_1$ est un premier terme de modulation et $M_2$ est un deuxième terme de modulation.

Le premier terme de modulation $M_1$ est une fonction périodique de l'angle de rotation de la colonne de direction, notamment de l'angle de rotation du volant ou de l'angle de rotation du pignon, de période un demi-tour de volant 22. Le premier terme de modulation $M_1$ est par exemple défini tel que : $M_1(\alpha_v) = 1 + A \times \sin(2 \times \alpha_v + \varphi)$, où A est une première constante de modulation prédéterminée non nulle et $\varphi$ est une deuxième constante de modulation prédéterminée.

En variante, le premier terme de modulation $M_1$ est défini tel que : $M_1(\alpha_v) = 1 + \sin(2 \times \alpha_v + \varphi) + \sin(4 \times \alpha_v + \varphi')$, où $\varphi$ est une première constante de modulation prédéterminée et $\varphi'$ est une deuxième constante de modulation prédéterminée.

Le deuxième terme de modulation $M_2$ est égal au couple correctif $C_1$ qui est une fonction prédéterminée de l'angle de rotation de la colonne de direction, notamment de l'angle de rotation du volant $\alpha_v$ ou de l'angle de rotation du pignon. Le couple correctif $C_1$ est une fonction périodique de période un tour de volant 22. Le couple correctif $C_1$ peut être approché par le couple correctif estimé $C_1'$ défini tel que : $C_1'(\alpha_v) = K \times \cos(\alpha_v) \times F_1 \times F_2$, où K est la constante de correction non nulle prédéterminée, $F_1$ est le premier coefficient d'atténuation non nul et $F_2$ est le deuxième coefficient d'atténuation non nul.

Lorsque les angles de brisure formés entre les tronçons supérieur et intermédiaire 26, 30 et entre les tronçons intermédiaire et inférieur 30, 28 sont sensiblement égaux et les joints de cardan 32, 33 sont calés angulairement, l'un par rapport à l'autre, autour du troisième axe de rotation 31 de sorte à former un angle de calage inférieur ou égal à l'angle de calage seuil et que la colonne de direction 20 comprend en outre les moyens de correction 36, le couple de volant $C_v$ est par exemple calculé tel que : $C_v(\alpha_v) = C_p + M(\alpha_v)$, où $C_p$ est le couple de pignon mesuré et M le terme de modulation, M étant égal au couple correctif $C_1$ qui est une fonction prédéterminée de la colonne de direction, notamment de l'angle de rotation du volant $\alpha_v$ ou de l'angle de rotation du pignon. Le couple correctif $C_1$ est une fonction périodique de période un tour de volant 22. Le couple correctif $C_1$ peut être approché par le couple correctif estimé $C_1'$ défini tel que : $C_1'(\alpha_v) = K \times \cos(\alpha_v) \times F_1 \times F_2$, où K est la constante de correction non nulle prédéterminée, $F_1$ est le premier coefficient d'atténuation non nul et $F_2$ est le deuxième coefficient d'atténuation non nul.

Exemples de moyens de correction 36

Les figures 7a et 7b montrent un premier exemple de moyens de correction 36 dans lequel les moyens de corrections 36 sont des moyens magnétiques. La figure 7a correspond à une configuration de la colonne de direction 20 pour un véhicule automobile prévu pour rouler à droite, tandis que la figure 7b correspond à une configuration de la colonne de direction 20 pour un véhicule automobile prévu pour rouler à gauche.

La colonne de direction 20 comprend un corps de colonne 37 fixe, globalement tubulaire, autour du premier axe de rotation 27 et dans lequel l'arbre de direction 21, notamment le tronçon supérieur 26 de l'arbre de direction 21, est monté en rotation autour dudit premier axe de rotation 27. Ainsi, le corps de colonne 37 guide l'arbre de direction 21 en rotation autour du premier axe de rotation 27.

Les moyens de correction 36 comprennent par exemple un premier aimant 121 monté solidaire en rotation avec l'arbre de direction 21 et un deuxième aimant 122 fixe monté solidairement sur le corps de colonne 37.

Le premier aimant 121 comprend une première surface 123 externe s'étendant sur un secteur angulaire autour du premier axe de rotation 27 et agencée radialement en regard du corps de colonne 37.

La première surface 123 du premier aimant 121 est d'un premier pôle magnétique P1.

La première surface 123 du premier aimant 121 s'étend par exemple sur un secteur angulaire autour du premier axe de rotation 27 compris entre 120 et 200°, de préférence sensiblement égal à 180°.

La première surface 123 du premier aimant 121 est par exemple concentrique par rapport à l'arbre de direction 21 et au corps de colonne 37. Autrement dit, la première surface 123 du premier aimant 121 présente par exemple la forme d'une surface latérale d'une portion de cylindre s'étendant autour du premier axe de rotation 27, de préférence d'une portion de cylindre de révolution.

Le premier aimant 121 peut en outre comprendre une deuxième surface 124 interne par l'intermédiaire de laquelle le premier aimant 121 est assemblé à l'arbre de direction 21. Pour cela, la deuxième surface 124 est par exemple de forme complémentaire avec la surface latérale de l'arbre de direction 21, notamment pour être collée à ladite surface latérale de l'arbre de direction 21.

Le premier aimant 121 présente préférentiellement la forme d'une portion de tube, notamment d'un demi-tube, la première surface 123 correspondant à la surface extérieure de ladite portion de tube et la deuxième surface 124 correspond à la surface intérieure de ladite portion de tube.

La deuxième surface 124 du premier aimant 121 est par exemple d'un deuxième pôle magnétique P2, opposé au premier pôle magnétique P1.

Le deuxième aimant 122 comprend une première surface 125 interne s'étendant sur un secteur angulaire autour du premier axe de rotation 27 et agencée radialement en regard de l'arbre de direction 21.

La première surface 125 est du deuxième pôle magnétique P2.

La première surface 125 du deuxième aimant 122 s'étend par exemple sur un secteur angulaire autour du premier axe de rotation 27 comprise entre 90 et 180°.

La première surface 125 du deuxième aimant 122 est par exemple concentrique par rapport à l'arbre de direction 21 et au corps de colonne 37. Autrement dit, la première surface 125 du deuxième aimant 122 présente par exemple la forme de la surface intérieure d'une portion de tube s'étendant autour de l'axe de colonne 12.

Le deuxième aimant 122 peut en outre comprendre une deuxième surface 126 externe par l'intermédiaire de laquelle le deuxième aimant 122 est assemblé au corps de colonne 37. Pour cela, la deuxième surface 126 est par exemple de forme complémentaire avec la surface intérieure du corps de colonne 37 et est collée à ladite surface intérieure du corps de colonne 37.

Le deuxième aimant 122 présente préférentiellement la forme d'une portion de tube, la première surface 125 correspondant à la surface intérieure de ladite portion de tube et la deuxième surface 126 correspondant à la surface extérieure de ladite portion de tube.

La deuxième surface 126 du deuxième aimant 122 est par exemple du premier pôle magnétique P1.

La première surface 123 du premier aimant 121 et la première surface 125 du deuxième aimant 122 sont en outre décalées angulairement l'une par rapport à l'autre autour du premier axe de rotation 27, lorsque le véhicule automobile roule en ligne droite. On entend par « décalées angulairement », le fait que la bissectrice du secteur angulaire du premier aimant 121 d'une part, et la bissectrice du secteur angulaire du deuxième aimant 122 d'autre part, forment ensemble un angle compris entre 50° et 130°, préférentiellement de 90°.

De cette manière, lorsque le véhicule automobile roule en ligne droite, la première surface 123 du premier aimant 121 et la première surface 125 du deuxième aimant 122 tendent à se rapprocher l'une de l'autre par attraction magnétique, ces dernières étant de pôles magnétiques opposées P1, P2. Ainsi, lorsque le véhicule automobile roule en ligne droite, l'attraction magnétique qu'exerce la première surface 125 du deuxième aimant 123 sur la première surface 123 du premier aimant 121 tend à faire pivoter l'arbre de direction 21 de sorte à aligner angulairement les premières surfaces 123, 125 des premier et deuxième aimants 121, 122, et permet de cette façon d'appliquer un couple correctif $C_1$ audit arbre de direction 21.

Les moyens de correction 36 peuvent en outre comprendre un troisième aimant 127 monté solidairement sur le corps de colonne 37.

Le troisième aimant 127 comprend une première surface 128 interne s'étendant sur un secteur angulaire autour du premier axe de rotation 27 et agencée radialement en regard de l'arbre de direction 21. La première surface 128 est du premier pôle magnétique P1.

Le secteur angulaire de la première surface 128 du troisième aimant 127 est distinct de celui de la première surface 125 du deuxième aimant 122. Autrement dit, les secteurs angulaires des premières surfaces 128, 125 du troisième et du deuxième aimants 127, 122 ne se chevauchent pas.

La première surface 128 du troisième aimant 127 s'étend par exemple sur un secteur angulaire autour du premier axe de rotation 27 compris entre 90 et 180°.

La première surface 128 du troisième aimant 127 est par exemple concentrique par rapport à l'arbre de direction 21 et au corps de colonne 37. Autrement dit, la première surface 128 du troisième aimant 127 présente par exemple la forme de la surface intérieure d'une portion de tube s'étendant autour du premier axe de rotation 27.

Le troisième aimant 127 peut en outre comprendre une deuxième surface 129 externe par l'intermédiaire de laquelle le troisième aimant 127 est assemblé au corps de colonne 37. Pour cela, la deuxième surface 129 est par exemple de forme complémentaire avec la surface intérieure du corps de colonne 37, notamment pour être collée à ladite surface intérieure du corps de colonne 37.

Le troisième aimant 127 peut ainsi présenter la forme d'une portion de tube, la première surface 128 correspondant à la surface intérieure de ladite portion de tube et la deuxième surface 129 correspondant à la surface extérieure de ladite portion de tube.

La deuxième surface 129 du troisième aimant 127 est par exemple du deuxième pôle magnétique P2.

Le troisième aimant 127 est par exemple agencé de manière diamétralement opposé par rapport au deuxième aimant 122.

La première surface 123 du premier aimant 121, la première surface 125 du deuxième aimant 122 et la première surface 128 du troisième aimant 127 sont en outre décalées angulairement l'une par rapport à l'autre autour du premier axe de rotation 27, lorsque le véhicule automobile roule en ligne droite. On entend par « décalées angulairement », le fait que la bissectrice du secteur angulaire du premier aimant 121 d'une part, et la bissectrice du secteur angulaire du troisième aimant 127 d'autre part, forment ensemble un angle compris entre 50° et 130°, préférentiellement de 90°.

De cette manière, lorsque le véhicule automobile roule en ligne droite, la première surface 123 du premier aimant 121 et la première surface 128 du troisième aimant 127 tendent à s'écarter l'une de l'autre du fait que ces dernières sont de même pôle magnétique P1. Ainsi, lorsque le véhicule automobile roule en ligne droite, la répulsion magnétique qu'exerce la première surface 128 du troisième aimant 127 sur la première surface 123 du premier aimant 121 tend à faire pivoter l'arbre de direction 21 de sorte à éloigner les premières surfaces 123, 128 des premier et troisième aimants 121, 127 et à rapprocher au contraire les premières surfaces 123, 125 des premier et deuxième aimants 121, 122, et permet de cette façon d'appliquer un couple correctif $C_1$ audit arbre de direction 21. Le couple correctif $C_1$ est ainsi d'intensité plus élevée qu'avec le premier et le deuxième aimants 121, 122 seuls.

En variante, les moyens de correction peuvent ne comprendre que les premier et troisième aimants 121, 127. Dans cette variante, la disposition du premier aimant 21 par rapport au troisième aimant 27, décrite en référence aux figures 7a et 7b, reste inchangée.

On comprendra que dans le cas d'un véhicule automobile prévu pour rouler à droite, le deuxième aimant 122 et le cas échéant le troisième aimant 127 seront agencés par rapport au premier aimant 121 de sorte à appliquer à l'arbre de direction 21 un couple correctif $C_1$ qui aura tendance à faire braquer les roues du véhicules automobiles vers la gauche, lorsque le véhicule automobile roule en ligne droite. En d'autres termes, le couple correctif $C_1$ sera dans ce cas orienté dans le sens antihoraire ou trigonométrique (figure 7a). A l'inverse, dans le cas d'un véhicule automobile prévu pour rouler à gauche, le deuxième aimant 122 et le cas échéant le troisième aimant 127 seront agencés par rapport au premier aimant 121 de sorte à appliquer à l'arbre de direction 21 un couple correctif $C_1$ qui aura tendance à faire braquer les roues du véhicule automobile vers la droite, lorsque le véhicule automobile roule en ligne droite. En d'autres termes, le couple correctif $C_1$ sera dans ce cas orienté dans le sens horaire ou sens anti-trigonométrique (figure 7b). La figure 7a correspond donc bien à une configuration de la colonne de direction 20 pour un véhicule automobile prévu pour rouler à droite, tandis que la figure 7b correspond bien à une configuration de la colonne de direction 20 pour un véhicule automobile prévu pour rouler à gauche.

Selon une variante de réalisation (non illustrée), les moyens de correction peuvent en outre comprendre un quatrième aimant monté solidaire en rotation avec l'arbre de direction 21.

Le quatrième aimant comprend une première surface externe s'étendant sur un secteur angulaire autour du premier axe de rotation 27 et agencée radialement en regard du corps de colonne 37. La première surface du quatrième aimant est du deuxième pôle magnétique P2.

Le secteur angulaire de la première surface du quatrième aimant est distinct de celui de la première surface 123 du premier aimant 121. Autrement dit, les secteurs angulaires des premières surfaces 123 du quatrième et du premier aimants 121 ne se chevauchent pas.

La première surface du quatrième aimant s'étend par exemple sur un secteur angulaire autour du premier axe de rotation 27 compris entre 90 et 180°.

La première surface du quatrième aimant est par exemple concentrique par rapport à l'arbre de direction 21 et au corps de colonne 37. Autrement dit, la première surface du quatrième aimant présente par exemple la forme d'une surface latérale d'une portion de cylindre s'étendant autour de l'axe de colonne 21, de préférence d'une portion de cylindre de révolution.

Le quatrième aimant comprend une deuxième surface interne par l'intermédiaire de laquelle le quatrième aimant est assemblé à l'arbre de direction. Pour cela, la deuxième surface est par exemple de forme complémentaire avec la surface latérale de l'arbre de direction, notamment pour être collée à ladite surface latérale de l'arbre de direction 21.

Le quatrième aimant présente la forme d'une portion de tube, notamment d'un demi-tube, la première surface correspondant à la surface extérieure de ladite portion de tube et la deuxième surface correspond à la surface intérieure de ladite portion de tube.

La deuxième surface du quatrième aimant est par exemple du premier pôle magnétique P1.

Le quatrième aimant est par exemple agencé de manière diamétralement opposé par rapport au premier aimant 121.

La première surface du quatrième aimant est en outre décalée angulairement autour de du premier axe de rotation 27 par rapport à la première surface 125 du deuxième aimant 122 et à la première surface 128 du troisième aimant 127. On entend par « décalées angulairement », le fait que la bissectrice du secteur angulaire du quatrième aimant d'une part, et la bissectrice du secteur angulaire du deuxième aimant 122 ou du troisième aimant 127 d'autre part, forment ensemble un angle compris entre 50° et 130°, préférentiellement de 90°.

En variante, les moyens de correction peuvent ne comprendre que les quatrième et deuxième aimants 122 ou encore que les quatrième et troisième aimants 127 ou encore que les quatrième, deuxième et troisième aimants 122, 127. Dans ces variantes, la disposition du quatrième aimant par rapport au deuxième et/ou au troisième aimants 122, 127 reste inchangée.

Le couple correctif $C_1$ permet ainsi de corriger une déviation du véhicule automobile due au dévers d'une route qui sera un devers à droite en cas de roulage à droite et un devers à gauche en cas de roulage à gauche.

Le couple correctif $C_1$ est une fonction périodique de période un tour de volant 22.

Le couple correctif $C_1$ peut par exemple être approché par un couple correctif estimé $C_1'$ défini tel que : $C_1'(\alpha_v) = K \times \cos(\alpha_v)$, où K est une constante de correction prédéterminée non nulle. K correspond au couple appliqué par les moyens de correction 36, lorsque le véhicule automobile roule en ligne droite

On notera que les moyens de correction 36 sont facilement adaptables au cas de roulage à droite et au cas de roulage à gauche. En effet, il suffit par exemple de changer le positionnement angulaire du premier aimant 121 par rapport au deuxième et au troisième aimants 122, 127, notamment en le pivotant de 180° autour du premier axe de rotation 27 (figures 7a et 7b), ou d'inverser la position des deuxième et troisième aimants 122, 127, lorsque l'arbre de direction 21 est dans la position angulaire de référence, pour modifier l'orientation du couple correctif $C_1$.

Les figures 8a et 8b montrent un deuxième exemple de moyens de correction 36 dans lequel les moyens de correction 36 sont des moyens mécaniques. La figure 8a correspond à une configuration de la colonne de direction 20 pour un véhicule automobile prévu pour rouler à droite, tandis que la figure 8b correspond à une configuration de la colonne de direction 20 pour un véhicule automobile prévu pour rouler à gauche.

Les moyens de correction 36 comprennent par exemple une came 131 montée solidaire en rotation avec l'arbre de direction 21 et définissant une surface de came 132 autour du premier axe de rotation 27.

Les moyens de correction 36 comprennent en outre un culbuteur 133 monté pivotant sur le corps de colonne 37 autour d'un cinquième axe de rotation 134 fixe parallèle au premier axe de rotation 27. Le culbuteur 133 comprend un roulement 135 destiné à rouler sur la surface de came 132 et des moyens de rappel élastique 136 configurés pour maintenir en contact le roulement 135 et la surface de came 132, en entraînant en rotation le culbuteur 133 autour du cinquième axe de rotation 134. Les moyens de rappel élastique 136 comprennent par exemple un ressort à compression monté entre le corps de colonne 37 et le culbuteur 133.

La came 131 et le culbuteur 133 sont en outre configurés pour que le roulement 135 du culbuteur 133 applique, via la surface de came 132, un effort non nul générant autour du premier axe de rotation 27 un couple correctif $C_1$ non nul, lorsque le véhicule automobile roule en ligne droite. On comprendra en particulier que l'effort appliqué par le roulement 135 du culbuteur 133 sur la surface de came 132, à distance du premier axe de rotation 27, induit un couple correctif $C_1$ autour dudit premier axe de rotation 27.

La came 131 présente une section transversale par rapport au premier axe de rotation 27 de forme ovale. La section transversale de la came 131 est excentrée par rapport au premier axe de rotation 27.

Dans le cas d'un véhicule automobile prévu pour rouler à gauche, la came 131 et le culbuteur 133 seront configurés pour que le roulement 135 du culbuteur 133 applique, via la surface de came 132, un couple correctif $C_1$ qui aura tendance à faire braquer les roues du véhicules automobiles vers la gauche. En d'autres termes, le couple correctif $C_1$ sera dans ce cas orienté dans le sens antihoraire ou trigonométrique (figure 8a). A l'inverse, dans le cas d'un véhicule automobile prévu pour rouler à gauche, le couple correctif $C_1$ appliqué par le roulement 135 du culbuteur 133 aura tendance à faire braquer les roues du véhicule automobile vers la droite. En d'autres termes, le couple correctif $C_1$ sera dans ce cas orienté dans le sens horaire ou sens anti-trigonométrique (figure 8b). La figure 8a correspond donc bien à une configuration de la colonne de direction 20 pour un véhicule automobile prévu pour rouler à droite, tandis que la figure 8b correspond bien à une configuration de la colonne de direction 20 pour un véhicule automobile prévu pour rouler à gauche.

Le couple correctif $C_1$ permet ainsi de corriger une déviation du véhicule automobile due au dévers d'une route qui sera un devers à droite en cas de roulage à droite et un devers à gauche en cas de roulage à gauche.

Le couple correctif $C_1$ est une fonction périodique de période un tour de volant 22.

Ce couple correctif $C_1$ peut par exemple être approché par un couple correctif estimé $C_1'$ défini tel que : $C_1'(\alpha_v) = K \times \cos(\alpha_v)$, où K est une constante de correction prédéterminée non nulle. K correspond au couple appliqué par les moyens de correction 36, lorsque le véhicule automobile roule en ligne droite.

On notera que ce deuxième exemple de moyens de correction 36 est facilement adaptable au cas de roulage à droite et au cas de roulage à gauche. En effet, il suffit par exemple de modifier la surface de came 132 (figures 8a et 8b) ou de changer le sens de rotation imposé par les moyens de rappel élastique 136 au culbuteur 133, pour modifier l'orientation du couple correctif $C_1$.

## Revendications

**1.** Ensemble (100) pour véhicule automobile s'étendant suivant une direction d'extension longitudinale (X), comprenant :

- un boîtier de direction (10) comprenant une crémaillère (11) s'étendant suivant une direction transversale (Y) et destinée à être reliée à des roues (R) du véhicule automobile,
- une colonne de direction (20) comprenant :

  ∘ un pignon (23) configuré pour appliquer à ladite crémaillère (11) un couple de pignon ($C_p$) de sorte à entraîner en translation la crémaillère (11) suivant la direction transversale (Y) ;
  ∘ un volant (22) configuré pour appliquer à la colonne de direction (20) un couple de volant ($C_v$) ;
  ∘ des premiers moyens de mesure (34) configurés pour mesurer un angle de rotation de la colonne de direction ($\alpha_v$) par rapport à une position angulaire de référence correspondant à un angle nul de rotation du volant ou du pignon et dans laquelle le véhicule automobile roule en ligne droite ;
  ∘ des deuxièmes moyens de mesure (35) configurés pour mesurer le couple de pignon ($C_p$) ;

- une direction assistée électrique (40) comprenant un moteur électrique (41) configuré pour convertir une intensité ($I_a$) d'un courant électrique délivrée au moteur électrique (41), dite intensité d'assistance, en un couple d'assistance ($C_a$) ou un effort d'assistance à appliquer sur la crémaillère (11) ;

- un dispositif de commande (50) de la direction assistée configuré pour déterminer, au moins à partir du couple de pignon ($C_p$) mesuré, l'intensité d'assistance ($I_a$) à délivrer au moteur électrique (41) de la direction assistée électrique (40) ;

- au moins un dispositif de modulation de la relation entre le couple de pignon ($C_p$) et le couple de volant ($C_v$), le couple de volant ($C_v$) étant égal au couple de pignon corrigé d'au moins un terme de modulation variable en fonction d'au moins l'angle de rotation de la colonne de direction ($\alpha_v$) ;

l'ensemble étant **caractérisé en ce que**

- la colonne de direction (20) comprend un arbre de direction (21) divisé en au moins trois tronçons (26, 28, 30) articulés, lesdits tronçons étant accouplés par l'intermédiaire de joints de cardan (32, 33) simples, un tronçon supérieur (26) s'étendant suivant un premier axe de rotation (27) et sur lequel est fixé le volant (22), un tronçon inférieur (28) s'étendant suivant un deuxième axe de rotation (29) et sur lequel le pignon (23) est monté solidaire en rotation autour du deuxième axe de rotation (29) et un tronçon intermédiaire (30) s'étendant suivant un troisième axe de rotation (31), le tronçon intermédiaire (30) étant relié à chacune de ses extrémité, au tronçon supérieur (26) et au tronçon inférieur (28) par l'intermédiaire d'un joint de cardan (32, 33) simple ;

et **en ce que** :

- le dispositif de commande (50) est configuré pour :

  ∘ calculer un couple de volant ($C_v$) au moins en fonction du couple de pignon ($C_p$) mesuré et du terme de modulation, la modulation entre le couple de pignon ($C_p$) et le couple de volant ($C_v$) étant introduite

- soit par l'agencement géométrique de la colonne de direction (20) seule,
- soit par l'agencement géométrique de la colonne de direction (20) et des moyens de correction (36) mécaniques ou magnétiques,
- soit par des moyens de correction (36) mécaniques ou magnétiques seuls, l'agencement géométrique de la colonne de direction (20) n'introduisant pas lui-même de modulation entre le couple de pignon ($C_p$) et le couple de volant ($C_v$) ;

○ déterminer, à partir du couple de volant ($C_v$) calculé, l'intensité d'assistance ($I_a$) à appliquer au moteur électrique (41) de la direction assistée électrique (40),

ensemble (100) dans lequel :

- des angles, dits angles de brisure, formés entre le tronçon supérieur (26) et le tronçon intermédiaire (30) d'une part et le tronçon intermédiaire (30) et le tronçon inférieur (28) d'autre part, ne sont pas égaux à 3° près ;
et/ou
- les joints de cardan (32, 33) sont calés angulairement l'un par rapport à l'autre autour du troisième axe de rotation (31) de sorte à former entre eux un angle de calage supérieur à un angle de calage seuil, l'angle de calage seuil étant égal à un angle de calage optimal majoré de 5°, l'angle de calage optimal correspondant à un angle de calage formé entre les joints de cardan (32, 33) autour du troisième axe de rotation (31) annulant une modulation de la relation entre le couple de pignon ($C_p$) et le couple de volant ($C_v$) introduite par les joints de cardan (32, 33) ;
- le dispositif de commande (50) étant configuré pour :

○ calculer un couple de volant ($C_v$) tel que : $C_v(\alpha_v) = C_p \times M(\alpha_v)$, où $C_p$ est le couple de pignon mesuré, M est le terme de modulation, et $\alpha_v$ est l'angle de rotation de la colonne de direction,
M étant une fonction périodique de l'angle de rotation de la colonne de direction de période d'un demi-tour de volant (22), le terme de modulation M étant défini tel que

■ $M(\alpha_v) = 1 + A \times \sin(2 \times \alpha_v + \varphi)$, où A est une première constante de modulation prédéterminée non nulle et $\varphi$ est une deuxième constante de modulation prédéterminée,
■ ou $M(\alpha_v) = 1 + \sin(2 \times \alpha_v + \varphi) + \sin(4 \times \alpha_v + \varphi')$, où $\varphi$ est une première constante de modulation prédéterminée et $\varphi'$ est une deuxième constante de modulation prédéterminée.

2. Ensemble (100) selon la revendication 1, dans lequel

- l'angle de rotation de la colonne de direction correspond à un angle de rotation du volant ($\alpha_v$) ou à l'angle de rotation du pignon,
ou
- l'angle de rotation de la colonne de direction correspond à un angle de rotation du pignon.

3. Ensemble (100) selon la revendication 1 ou la revendication 2, dans lequel l'intensité d'assistance ($I_a$) est déterminée de sorte que le couple de volant ($C_v$) demeure inférieur ou égal à une borne prédéterminée.

4. Ensemble (100) selon l'une quelconque des revendications précédentes, dans lequel :

- la colonne de direction (20) comprend en outre des moyens de correction (36) configurés pour appliquer au tronçon supérieur (26) un couple correctif ($C_1$) autour du premier axe de rotation (27), le couple correctif ($C_1$) étant d'intensité variable en fonction de l'angle de rotation de la colonne de direction ($\alpha_v$),
- le dispositif de commande (50) est configuré pour :

○ calculer un couple de volant ($C_v$) tel que : $C_v(\alpha_v) = C_p \times M_1(\alpha_v) + M_2(\alpha_v)$, où $C_p$ est le couple de pignon mesuré, $M_1$ est un premier terme de modulation, $M_2$ est un deuxième terme de modulation, et $\alpha_v$ est l'angle de rotation de la colonne de direction,
$M_1$ étant une fonction périodique de l'angle de rotation de la colonne de direction de période d'un demi-tour de volant (22), $M_2$ étant égal au couple correctif ($C_1$) qui est une fonction prédéterminée de l'angle de rotation de la colonne de direction ($\alpha_v$).

5. Ensemble (100) selon la revendication 4, dans lequel :

- le premier terme de modulation $M_1$ est défini tel que $M_1(\alpha_v) = 1 + A \times \sin(2 \times \alpha_v + \varphi)$, où A est une première constante de modulation prédéterminée non nulle et $\varphi$ est une deuxième constante de modulation prédéterminée
ou
- le premier terme de modulation $M_1$ est défini tel que $M_1(\alpha_v) = 1 + \sin(2 \times \alpha_v + \varphi) + \sin(4 \times \alpha_v + \varphi')$, où $\varphi$ est une première constante de modulation prédéterminée et $\varphi'$ est une deuxième constante de modulation prédéterminée.

6. Ensemble (100) selon l'une quelconque des revendications précédentes, dans lequel, pour le calcul du couple de volant ($C_v$), le couple correctif ($C_1$) est une fonction périodique de période un tour de volant (22), qui est approché par un couple correctif estimé ($C_1'$) défini tel que : $C_1'(\alpha_v) = K \times \cos(\alpha_v) \times F_1 \times F_2$, où K est une constante de correction prédéterminée non nulle, $F_1$ est un premier coefficient d'atténuation non nul et $F_2$ est un deuxième coefficient d'atténuation non nul.

**7.** Ensemble (100) selon la revendication 6, comprenant des troisièmes moyens de mesure (60) configurés pour mesurer une vitesse du véhicule automobile ($V_{veh}$), le premier coefficient d'atténuation ($F_1$) étant défini de sorte à diminuer de manière continue de 1 à 0 lorsque la vitesse du véhicule automobile ($V_{veh}$) augmente.

**8.** Ensemble (100) selon la revendication 7, dans lequel le premier coefficient d'atténuation ($F_1$) est défini tel que :

$$F_1 = 1 - \frac{2}{\pi}\arctan\left(V_{veh}\middle/V_{veh/lim}\right),$$

où $V_{veh/lim}$ correspond à une vitesse limite du véhicule automobile prédéterminée et $V_{veh}$ correspond à la vitesse mesurée du véhicule automobile.

**9.** Ensemble (100) selon l'une des revendications 6 à 8, comprenant des quatrièmes moyens de mesure (70) configurés pour mesurer une vitesse de braquage des roues ($V_b$) du véhicule automobile, le deuxième coefficient d'atténuation ($F_2$) étant défini de sorte à augmenter de manière continue de 0 à 1 lorsque la vitesse de braquage des roues ($V_b$) augmente.

**10.** Ensemble (100) selon la revendication 9, dans lequel le deuxième coefficient d'atténuation ($F_2$) est défini

$$F_2 = \frac{2}{\pi}\arctan\left(V_b\middle/V_{b/lim}\right),$$

tel que : où $V_{b/lim}$ correspond à une vitesse limite de braquage des roues prédéterminée et $V_b$ correspond à la vitesse mesurée de braquage des roues du véhicule automobile.

**11.** Véhicule automobile comprenant un ensemble (100) selon l'une des revendications 1 à 10.

**12.** Procédé (200) pour piloter une direction assistée électrique (40) d'un ensemble (100) pour véhicule automobile selon l'une des revendications 1 à 10, comprenant les étapes de :

a) mesure (201) de l'angle de rotation de la colonne de direction ($\alpha_v$) et du couple de pignon ($C_p$) ;
b) calcul (202), au moins en fonction du couple de pignon ($C_p$) mesuré et du terme de modulation, du couple de volant ($C_v$) ;
c) détermination (203), à partir du couple de volant ($C_v$) ainsi calculé, de l'intensité d'assistance ($I_a$) à délivrer au moteur électrique (41) de la direction assistée électrique (40) ;
d) délivrance (204) de l'intensité d'assistance ($I_a$) ainsi déterminée, de sorte à appliquer à la crémaillère (11) un couple d'assistance ($C_a$) ou un effort d'assistance tenant compte de l'angle de rotation de la colonne de direction ($\alpha_v$) et du couple de pignon ($C_p$).

**13.** Programme d'ordinateur comprenant des instructions de code de programme conçues pour exécuter des étapes a) à c) du procédé selon la revendication 12, lorsque le programme est exécuté sur un ordinateur.

**Patentansprüche**

**1.** Einheit (100) für ein Kraftfahrzeug, die sich gemäß einer Längsausdehnungsrichtung (X) erstreckt, die enthält:

- ein Lenkgehäuse (10), das eine Zahnstange (11) enthält, die sich gemäß einer Querrichtung (Y) erstreckt und dazu bestimmt ist, mit Rädern (R) des Kraftfahrzeugs verbunden zu werden,
- eine Lenksäule (20), die enthält:

o ein Ritzel (23), das konfiguriert ist, an die Zahnstange (11) ein Ritzelmoment ($C_p$) anzuwenden, um die Zahnstange (11) gemäß der Querrichtung (Y) in Translation anzutreiben;
o ein Lenkrad (22), das konfiguriert ist, ein Lenkradmoment ($C_v$) an die Lenksäule (20) anzuwenden;
o erste Messeinrichtungen (34), die konfiguriert sind, einen Drehwinkel der Lenksäule ($\alpha_v$) bezüglich einer Bezugswinkelstellung zu messen, die einem Drehwinkel Null des Lenkrads oder des Ritzels entspricht und in der das Kraftfahrzeug geradeaus fährt;
o zweite Messeinrichtungen (35), die konfiguriert sind, das Ritzelmoment ($C_p$) zu messen;

- eine elektrische Servolenkung (40), die einen Elektromotor (41) enthält, der konfiguriert ist, eine Stärke ($I_a$) eines an den Elektromotor (41) gelieferten elektrischen Stroms, Lenkhilfestärke genannt, in ein Lenkhilfemoment ($C_a$) oder eine an die Zahnstange (11) anzuwendende Lenkhilfekraft umzuwandeln;
- eine Steuervorrichtung (50) der Servolenkung, die konfiguriert ist, zumindest ausgehend vom gemessenen Ritzelmoment ($C_P$) die an den Elektromotor (41) der elektrischen Servolenkung (40) zu liefernde Lenkhilfestärke ($I_a$) zu bestimmen;
- mindestens eine Modulationsvorrichtung der Beziehung zwischen dem Ritzelmoment ($C_P$) und dem Lenkradmoment ($C_V$), wobei das Lenkradmoment ($C_V$) gleich dem Ritzelmoment korrigiert um mindestens einen variablen Modulationsterm abhängig von mindestens dem Drehwinkel der Lenksäule ($\alpha_V$) ist; wobei die Einheit **dadurch gekennzeichnet ist, dass**

- die Lenksäule (20) eine in mindestens drei gelenkige Abschnitte (26, 28, 30) aufgeteilte Lenkspindel (21) enthält, wobei die Abschnitte mittels einfacher Kardangelenke (32, 33) gekoppelt sind, wobei ein oberer Abschnitt (26) sich gemäß einer ersten Drehachse (27) erstreckt und auf dem das Lenkrad (22) befestigt ist, ein unterer Abschnitt (28) sich gemäß einer zweiten Drehachse (29) erstreckt und auf den das Ritzel (23) in Drehung um die zweite Drehachse (29) fest verbunden montiert ist, und ein Zwischenabschnitt (30) sich gemäß einer dritten Drehachse (31) erstreckt, wobei der Zwischenabschnitt (30) an jedem seiner Enden mit dem oberen Abschnitt (26) und dem unteren Abschnitt (28) mittels eines einfachen Kardangelenks (32, 33) verbunden ist;

und dass:

    - die Steuervorrichtung (50) konfiguriert ist:

        ◦ ein Lenkradmoment ($C_V$) zumindest abhängig vom gemessene Ritzelmoment ($C_P$) und vom Modulationsterm zu berechnen, wobei die Modulation zwischen dem Ritzelmoment ($C_P$) und dem Lenkradmoment ($C_V$) eingeführt wird

    - entweder nur durch die geometrische Anordnung der Lenksäule (20),
    - oder durch die geometrische Anordnung der Lenksäule (20) und der mechanischen oder magnetischen Korrektureinrichtungen (36),
    - oder nur durch mechanische oder magnetische Korrektureinrichtungen (36), wobei die geometrische Anordnung der Lenksäule (20) selbst keine Modulation zwischen dem Ritzelmoment ($C_P$) und dem Lenkradmoment ($C_V$) einführt;

        ◦ ausgehend vom berechneten Lenkradmoment ($C_V$) die an den Elektromotor (41) der elektrischen Servolenkung (40) anzuwendende Lenkhilfestärke ($I_a$) zu bestimmen,

Einheit (100), bei der:

    - Bruchwinkel genannte Winkel, die zwischen dem oberen Abschnitt (26) und dem Zwischenabschnitt (30) einerseits und dem Zwischenabschnitt (30) und dem unteren Abschnitt (28) geformt werden, bis auf 3° nicht gleich sind;
und/oder
    - die Kardangelenke (32, 33) um die dritte Drehachse (31) winkelmäßig zueinander eingestellt werden, um zwischen ihnen einen Einstellwinkel größer als ein Schwellen-Einstellwinkel zu formen, wobei der Schwellen-Einstellwinkel gleich einem optimalen Einstellwinkel erhöht um 5° ist, wobei der optimale Einstellwinkel einem zwischen den Kardangelenken (32, 33) um die dritte Drehachse (31) geformten Einstellwinkel entspricht, der eine Modulation der Beziehung zwischen dem Ritzelmoment ($C_P$) und dem Lenkradmoment ($C_V$) annulliert, die von den Kardangelenken (32, 33) eingeführt wird;
- wobei die Steuervorrichtung (50) konfiguriert ist:

        ◦ ein Lenkradmoment ($C_V$) so zu berechnen, dass gilt: $C_V(\alpha_V) = C_P \times M(\alpha_V)$, wobei $C_P$ das gemessene Ritzelmoment ist, M der Modulationsterm ist, und $\alpha_V$ der Drehwinkel der Lenksäule ist,

wobei M eine periodische Funktion des Drehwinkels der Lenksäule mit einer Periode einer halben Lenkradumdrehung (22) ist, wobei der Modulationsterm M so definiert ist, dass gilt

    • $M(\alpha_V) = 1 + A \times \sin(2 \times \alpha_V + \varphi)$, wobei A eine vorbestimmte erste Modulationskonstante ungleich Null ist, und $\varphi$ eine zweite vorbestimmte Modulationskonstante ist,
    • oder $M(\alpha_V) = 1 + \sin(2 \times \alpha_V + \varphi) + \sin(4 \times \alpha_V + \varphi')$, wobei $\varphi$ eine erste vorbestimmte Modulationskonstante ist, und $\varphi'$ eine zweite vorbestimmte Modulationskonstante ist.

2. Einheit (100) nach Anspruch 1, wobei

    - der Drehwinkel der Lenksäule einem Drehwinkel des Lenkrads ($\alpha_V$) oder dem Drehwinkel des Ritzels entspricht,
    oder
    - der Drehwinkel der Lenksäule einem Drehwinkel des Ritzels entspricht.

3. Einheit (100) nach Anspruch 1 oder Anspruch 2, wobei die Lenkhilfestärke ($I_a$) so bestimmt wird, dass das Lenkradmoment (C) unter oder gleich einer vorbestimmten Grenze bleibt.

4. Einheit (100) nach einem der vorhergehenden Ansprüche, wobei:

- die Lenksäule (20) außerdem Korrektureinrichtungen (36) enthält, die konfiguriert sind, an den oberen Abschnitt (26) ein korrektives Drehmoment ($C_1$) um die erste Drehachse (27) anzuwenden, wobei das korrektive Drehmoment ($C_1$) eine variable Stärke abhängig vom Drehwinkel der Lenksäule ($\alpha_V$) hat,

- die Steuervorrichtung (50) konfiguriert ist:

○ ein Lenkradmoment ($C_V$) so zu berechnen, dass gilt: $C_V(\alpha_V) = C_P \times M_1(\alpha_V) + M_2(\alpha_V)$, wobei $C_P$ das gemessene Ritzelmoment ist, $M_1$ ein erster Modulationsterm ist, $M_2$ ein zweiter Modulationsterm ist, und $\alpha_V$ der Drehwinkel der Lenksäule ist,

wobei $M_1$ eine periodische Funktion des Drehwinkels der Lenksäule mit einer Periode einer halben Lenkradumdrehung (22) ist, $M_2$ gleich dem korrektiven Drehmoment ($C_1$) ist, das eine vorbestimmte Funktion des Drehwinkels der Lenksäule ($\alpha_V$) ist.

5. Einheit (100) nach Anspruch 4, wobei:

- der erste Modulationsterm $M_1$ so definiert ist, dass gilt $M_1(\alpha_V) = 1 + A \times \sin(2 \times \alpha_V + \varphi)$, wobei A eine erste vorbestimmte Modulationskonstante ungleich Null und $\varphi$ eine zweite vorbestimmte Modulationskonstante ist,
oder
- der erste Modulationsterm $M_1$ so definiert ist, dass gilt $M_1(\alpha_V) = 1 + \sin(2 \times \alpha_V + \varphi) + \sin(4 \times \alpha_V + \varphi')$, wobei $\varphi$ eine erste vorbestimmte Modulationskonstante ist, und $\varphi'$ eine zweite vorbestimmte Modulationskonstante ist.

6. Einheit (100) nach einem der vorhergehenden Ansprüche, wobei, zur Berechnung des Lenkradmoments ($C_V$), das korrektive Drehmoment ($C_1$) eine periodische Funktion mit einer Periode einer Lenkradumdrehung (22) ist, die durch ein geschätztes korrektives Drehmoment ($C_1'$) angenähert wird, das so definiert ist, dass gilt:
$C_1'(\alpha_V) = K \times \cos(\alpha_V) \times F_1 \times F_2$, wobei K eine vorbestimmte Korrekturkonstante ungleich Null ist, $F_1$ ein erster Dämpfungskoeffizient ungleich Null und $F_2$ ein zweiter Dämpfungskoeffizient ungleich Null ist.

7. Einheit (100) nach Anspruch 6, die dritte Messeinrichtungen (60) enthält, die konfiguriert sind, eine Geschwindigkeit des Kraftfahrzeugs ($V_{veh}$) zu messen, wobei der erste Dämpfungskoeffizient ($F_1$) so definiert wird, dass er kontinuierlich von 1 bis 0 abnimmt, wenn die Geschwindigkeit des Kraftfahrzeugs ($V_{veh}$) zunimmt.

8. Einheit (100) nach Anspruch 7, wobei der erste Dämpfungskoeffizient ($F_1$) so definiert wird, dass gilt:

$$F_1 = 1 - \frac{2}{\pi} arctan\left(V_{veh} \middle/ V_{veh/lim}\right),$$ wobei $V_{veh/lim}$ einer vorbestimmten Grenzgeschwindigkeit des Kraftfahrzeugs entspricht, und $V_{veh}$ der gemessenen Geschwindigkeit des Kraftfahrzeugs entspricht.

9. Einheit (100) nach einem der Ansprüche 6 bis 8, die vierte Messeinrichtungen (70) enthält, die konfiguriert sind, eine Einschlaggeschwindigkeit der Räder ($V_b$) des Kraftfahrzeugs zu messen, wobei der zweite Dämpfungskoeffizient ($F_2$) so definiert wird, dass er kontinuierlich von 0 bis 1 zunimmt, wenn die Einschlaggeschwindigkeit der Räder ($V_b$) zunimmt.

10. Einheit (100) nach Anspruch 9, wobei der zweite Dämpfungskoeffizient ($F_2$) so definiert wird, dass gilt:

$$F_2 = \frac{2}{\pi} arctan\left(V_b \middle/ V_{b/lim}\right),$$ wobei $V_{b/lim}$ einer vorbestimmten Einschlaggrenzgeschwindigkeit der Räder entspricht, und $V_b$ der gemessenen Einschlaggeschwindigkeit der Räder des Kraftfahrzeugs entspricht.

11. Kraftfahrzeug, das eine Einheit (100) nach einem der Ansprüche 1 bis 10 enthält.

12. Verfahren (200) zum Steuern einer elektrischen Servolenkung (40) einer Einheit (100) für ein Kraftfahrzeug nach einem der Ansprüche 1 bis 10, das die folgenden Schritte enthält:

a) Messung (201) des Drehwinkels der Lenksäule ($\alpha_V$) und des Ritzelmoments ($C_P$);
b) Berechnung (202), zumindest abhängig vom gemessenen Ritzelmoment ($C_P$) und vom Modulationsterm, des Lenkradmoments ($C_V$);
c) Bestimmung (203), ausgehend vom so berechneten Lenkradmoment ($C_V$), der an den Elektromotor (41) der elektrischen Servolenkung (40) zu liefernden Lenkhilfestärke ($I_a$);
d) Liefern (204) der so bestimmten Lenkhilfestärke ($I_a$), um ein Lenkhilfemoment ($C_a$) oder eine Lenkhilfekraft unter Berücksichtigung des Drehwinkels der Lenksäule ($\alpha_V$) und des Ritzelmoments ($C_P$) an die Zahnstange (11) anzuwenden.

13. Computerprogramm, das Programmcodeanweisungen enthält, die konzipiert sind, Schritte a) bis c) des Verfahrens nach Anspruch 12 auszuführen, wenn das Programm auf einem Computer ausgeführt wird.

**Claims**

1.  Assembly (100) for a motor vehicle that is arranged in a lengthwise direction of extent (X), comprising:

    - a steering unit (10) including a rack (11) that is arranged in a transverse direction (Y) and that is designed to be linked to the wheels (R) of the motor vehicle,
    - a steering column (20) including:

        o a pinion (23) that is designed to apply a pinion torque ($C_p$) to said rack (11) in order to drive the rack (11) in translation in the transverse direction (Y),
        o a steering wheel (22) designed to apply a steering wheel torque ($C_v$) to the steering column (20),
        ○ first measurement means (34) designed to measure an angle of rotation of the steering column ($\alpha_v$) in relation to a reference angular position corresponding to a zero angle of rotation of the steering wheel or of the pinion and at which the motor vehicle travels in a straight line,
        ○ second measurement means (35) designed to measure the pinion torque ($C_p$),

    - electric power steering (40) including an electric motor (41) designed to convert an intensity ($I_a$) of an electric current delivered to the electric motor (41), referred to as the auxiliary current intensity, into an auxiliary torque ($C_a$) or into an auxiliary force to be applied to the rack (11),
    - a device (50) for controlling the power steering that is designed to determine, at least as a function of the measured pinion torque ($C_p$), the auxiliary current intensity ($I_a$) to be delivered to the electric motor (41) of the electric power steering (40),
    - at least one device for modulating the relationship between the pinion torque ($C_p$) and the steering wheel torque ($C_v$), the steering wheel torque ($C_v$) being equal to the pinion torque corrected by at least one modulation term that is variable at least as a function of the angle of rotation of the steering column ($\alpha_v$),

    the assembly being **characterized in that**:

    - the steering column (20) includes a steering shaft (21) split into at least three articulated sections (26, 28, 30), said sections being coupled by means of simple universal joints (32, 33), an upper section (26) being arranged along a first axis of rotation (27) and to which the steering wheel (22) is attached, a lower section (28) being arranged along a second axis of rotation (29) and with which the pinion (23) is constrained to rotate about the second axis of rotation (29) and an intermediate section (30) being arranged along a third axis of rotation (31), the intermediate section (30) being linked to the upper section (26) and to the lower section (28) by means of a simple universal joint (32, 33) at each end thereof,

    and **in that**:

    - the control device (50) is designed to:

        ◦ calculate a steering wheel torque ($C_v$) at least as a function of the measured pinion torque ($C_p$) and of the modulation term, the modulation between the pinion torque ($C_p$) and the steering wheel torque ($C_v$) being provided either by:

    - the geometric arrangement of the steering column (20) alone, or
    - the geometric arrangement of the steering column (20) and the mechanical or magnetic correction means (36), or
    - the mechanical or magnetic correction means (36) alone, the geometric arrangement of the steering column (20) not providing any modulation between the pinion torque ($C_p$) and the steering wheel torque ($C_v$) itself,

        ◦ determine, as a function of the calculated steering wheel torque ($C_v$), the auxiliary current intensity ($I_a$) to be applied to the electric motor (41) of the electric power steering (40),

    in which assembly (100):

    - the angles, referred to as operating angles, formed between the upper section (26) and the intermediate section (30) on the one hand and between the intermediate section (30) and the lower section (28) on the other hand are not within 3° of one another,
    and/or
    - the universal joints (32, 33) are offset angularly in relation to one another about the third axis of rotation (31) such as to form an offset angle therebetween that is greater than a threshold offset angle, the threshold offset angle being equal to an optimal offset angle increased by 5°, the optimal offset angle being an offset angle formed between the universal joints (32, 33) about the third axis of rotation (31) eliminating a modulation of the relationship between the pinion torque ($C_p$) and the steering wheel torque ($C_v$) caused by the universal joints (32, 33),

- the control device (50) being designed to:

○ calculate a steering wheel torque ($C_v$) such that: $C_v(\alpha_v) = C_p + M(\alpha_v)$, where $C_p$ is the measured pinion torque, M is the modulation term and $\alpha_v$ is the angle of rotation of the steering column,

M being a periodic function of the angle of rotation of the steering column with a period of one half turn of the steering wheel (22) the modulation term M being defined such that

- $M(\alpha_v) = 1 + A \times \sin(2 \times \alpha_v + \varphi)$, where A is a first predetermined non-zero modulation constant and $\varphi$ is a second predetermined modulation constant,
- or $= 1 + \sin(2 \times \alpha_v + \varphi) + \sin(4 \times \alpha_v + \varphi')$, where $\varphi$ is a first predetermined modulation constant and $\varphi'$ is a second predetermined modulation constant.

2. Assembly (100) according to Claim 1, in which:

- the angle of rotation of the steering column is an angle of rotation of the steering wheel ($\alpha_v$) or the angle of rotation of the pinion, or
- the angle of rotation of the steering column is an angle of rotation of the pinion.

3. Assembly (100) according to Claim 1 or Claim 2, in which the auxiliary current intensity ($I_a$) is determined such that the steering wheel torque ($C_v$) is equal to or less than a predetermined limit.

4. Assembly (100) according to any one the preceding claims, in which

- the steering column (20) also has correction means (36) that are designed to apply a corrective torque ($C_1$) to the upper shaft section (26) about the first axis of rotation (27), the intensity of the corrective torque ($C_1$) being variable as a function of the angle of rotation of the steering column ($\alpha_v$),
- the control device (50) is designed to:

○ calculate a steering wheel torque ($C_v$) such that: $C_v(\alpha_v) = C_p \times M_1(\alpha_v) + M_2(\alpha_v)$, where $C_p$ is the measured pinion torque, $M_1$ is a first modulation term, $M_2$ is a second modulation term and $\alpha_v$ is the angle of rotation of the steering column,

$M_1$ being a periodic function of the angle of rotation of the steering column having a period of one half-turn of the steering wheel (22), $M_2$ being equal to the corrective torque

($C_1$) that is a predetermined function of the angle of rotation of the steering column ($\alpha_v$).

5. Assembly (100) according to Claim 4, in which:

- the first modulation term $M_1$ is defined such that $M_1(\alpha_v) = 1 + A \times \sin(2 \times \alpha_v + \varphi)$, where A is a first predetermined non-zero modulation constant and $\varphi$ is a second predetermined modulation constant,
or
- the first modulation term $M_1$ is defined such that $M_1(\alpha_v) = 1 + \sin(2 \times \alpha_v + \varphi) + \sin(4 \times \alpha_v + \varphi')$, where $\varphi$ is a first predetermined modulation constant and $\varphi'$ is a second pre-determined modulation constant.

6. Assembly (100) according to any one of the preceding claims, in which, to calculate the steering wheel torque ($C_v$), the corrective torque ($C_1$) is a periodic function having a period of one turn of the steering wheel (22), that is approximated by an estimated corrective torque ($C_1'$) defined such that: $C_1'(\alpha_v) = K \times \cos(\alpha_v) \times F_1 \times F_2$, where K is a predetermined non-zero correction constant, $F_1$ is a first non-zero attenuation coefficient and $F_2$ is a second non-zero attenuation coefficient.

7. Assembly (100) according to Claim 6, including third measurement means (60) designed to measure a speed ($V_{veh}$) of the motor vehicle, the first attenuation coefficient ($F_1$) being defined such as to decrease continuously from 1 to 0 as the speed ($V_{veh}$) of the motor vehicle increases.

8. Assembly (100) according to Claim 7, in which the first attenuation coefficient ($F_1$) is defined such that:

$$F_1 = 1 - \frac{2}{\pi} arctan \left( V_{veh} \middle/ V_{veh/lim} \right),$$

where $V_{veh/lim}$ is a predetermined limit speed of the motor vehicle and $V_{veh}$ is the measured speed of the motor vehicle.

9. Assembly (100) according to one of Claims 6 to 8, including fourth measurement means (70) designed to measure a turning speed ($V_b$) of the wheels of the motor vehicle, the second attenuation coefficient ($F_2$) being defined such as to increase continuously from 0 to 1 as the turning speed ($V_b$) of the wheels increases.

10. Assembly (100) according to Claim 9, in which the second attenuation coefficient ($F_2$) is defined such that:

$$F_2 = \frac{2}{\pi} arctan \left( V_b \middle/ V_{b/lim} \right), \quad \text{where}$$

$V_{b/lim}$ is a predetermined turning limit speed of the wheels and $V_b$ is the measured turning speed of the wheels of the motor vehicle.

11. Motor vehicle including an assembly (100) according to one of Claims 1 to 10.

12. Method (200) for controlling the electric power steering (40) of an assembly (100) for a motor vehicle according to one of Claims 1 to 10, including the following steps:

a) measurement (201) of the angle of rotation ($\alpha_v$) of the steering column and of the pinion torque ($C_p$),
b) calculation (202) of the steering wheel torque ($C_v$), at least as a function of the measured pinion torque ($C_p$) and of the modulation term,
c) determination (203), as a function of the steering wheel torque ($C_v$) thus calculated, of the auxiliary current intensity ($I_a$) to be delivered to the electric motor (41) of the electric power steering (40),
d) delivery (204) of the auxiliary current intensity ($I_a$) thus determined, such as to apply to the rack (11) an auxiliary torque ($C_a$) or an auxiliary force in consideration of the angle of rotation ($\alpha_v$) of the steering column and of the pinion torque ($C_p$).

13. Computer program including program code instructions designed to perform steps (a) to (c) of the method according to Claim 12 when the program is run on a computer.

**Fig. 1**

**Fig. 2**

**Fig. 3**

50

52    53    54    200    51

| $\alpha_v$ | $C_p$ | $F_1$ |
| $F_2$ | A | $\varphi$ |
| $C_v$ | $I_a$ | $V_{veh/lim}$ |
| $V_{b/lim}$ | S | |

$\alpha_v$ → 34

$I_a$ → 41

$C_p$ → 35

$V_{veh}$ → 60

56

$\mu$

55

$V_b$ → 70

## Fig. 4

200

201 — Mesure de l'angle de rotation de la colonne de direction et du couple de pignon $C_p$

202 — Calcul, au moins en fonction du couple de pignon $C_p$ mesuré et d'un terme de modulation, d'un couple de volant $C_v$

203 — Détermination, à partir du couple de volant $C_v$ ainsi calculé, de l'intensité d'assistance $I_a$ à délivrer au moteur électrique de la direction assistée électrique

204 — Délivrance de l'intensité d'assistance $I_a$ au moteur électrique de la direction assistée électrique

## Fig. 5

**Fig. 6**

**Fig. 7a**

**Fig. 7b**

**Fig. 8a**

**Fig. 8b**

**EP 3 612 431 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2007107977 A